(19) Europäisches Patentamt
European Patent Office
Office européen des brevets

(11) **EP 2 816 083 B1**

(12) **EUROPÄISCHE PATENTSCHRIFT**

(45) Veröffentlichungstag und Bekanntmachung des Hinweises auf die Patenterteilung:
**20.02.2019   Patentblatt 2019/08**

(51) Int Cl.:
***C08K 9/02*** *(2006.01)*

(21) Anmeldenummer: **13172870.1**

(22) Anmeldetag: **19.06.2013**

(54) **Bauteil hergestellt aus einem Polymer-Bornitrid-Compound, Polymer-Bornitrid-Compound zur Herstellung eines solchen Bauteils sowie dessen Verwendung**

Component made of a polymer boron nitride compound, polymer boron nitride compound for producing such a component and its use

Elément fabriqué à partir d'un composé polymère - nitrure de bore, composé polymère - nitrure de bore pour la fabrication d'un tel élément et leur utilisation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.12.2014   Patentblatt 2014/52**

(73) Patentinhaber:
• **3M Innovative Properties Company**
**St. Paul, MN 55133-3427 (US)**
• **Robert Bosch GmbH**
**70442 Stuttgart (DE)**

(72) Erfinder:
• **Uibel, Krishna, Dr.**
**87437 Waltenhofen (DE)**
• **Kayser, Armin**
**87474 Buchenberg (DE)**

• **Zimmermann, Johanna**
**23552 Lübeck (DE)**
• **Maier, Ilonka**
**73666 Baltmannsweiler (DE)**
• **Schmiederer, Dirk**
**70806 Kornwestheim (DE)**
• **Bader, Maximilian**
**70191 Stuttgart (DE)**

(74) Vertreter: **Ter Meer Steinmeister & Partner Patentanwälte mbB**
**Nymphenburger Straße 4**
**80335 München (DE)**

(56) Entgegenhaltungen:
**WO-A1-2014/047298        WO-A1-2014/080743**
**DE-A1-102010 050 900    DE-A1-102011 114 413**
**US-A1- 2006 127 422**

**Beschreibung**

Die vorliegende Erfindung betrifft ein Bauteil hergestellt aus einem Polymer-Compound unter Verwendung von stabilen Bornitrid-Agglomeraten mit hoher Through-plane-Wärmeleitfähigkeit und guten mechanischen Eigenschaften, ein Polymer-Bornitrid-Compound zur Herstellung eines solchen Bauteils sowie die Verwendung eines solchen Bauteils zur Wärmeleitung.

Kunststoffe werden in vielfältigen Anwendungen eingesetzt. Dabei werden oft die Eigenschaften des Basispolymers durch Compoundierung mit zusätzlichen Komponenten modifiziert und dadurch an die jeweilige Anwendung angepasst.

Als zusätzliche Komponenten für die Compoundierung mit der Polymermatrix können beispielsweise organische, mineralische, keramische, glasige und metallische Füllstoffe eingesetzt werden. Die zusätzlichen Komponenten können beispielsweise eingesetzt werden zur Modifizierung der mechanischen oder elektrischen Eigenschaften, des Wärmeausdehnungskoeffizienten, der Fließfähigkeit, der Alterungsstabilität, der Entformbarkeit, der Farbe oder der Dichte oder zur Erhöhung der Wärmeleitfähigkeit.

Bei der Compoundierung entsteht ein Mischwerkstoff aus Polymeren und den zusätzlichen Komponenten, der typischerweise als Granulat anfällt und in Formgebungsprozessen weiterverarbeitet wird. Die Formgebung zu Bauteilen erfolgt bevorzugt im Spritzguss.

Zur Herstellung von wärmeleitfähigen Mischwerkstoffen auf Polymerbasis werden wärmeleitfähige Füllstoffe in die meist nur wenig wärmeleitfähige Polymermatrix eingebracht. Hexagonales Bornitrid ist ein hoch wärmeleitfähiger Füllstoff mit plättchenförmiger Partikelmorphologie, der zur Herstellung von wärmeleitfähigen Polymer-Bornitrid-Mischwerkstoffen (Polymer-Bornitrid-Compounds) eingesetzt werden kann.

Da viele wärmeleitfähige Füllstoffe, wie zum Beispiel hexagonales Bornitrid, einen signifikant höheren Preis pro Kilogramm Werkstoff als viele großtechnisch genutzte Polymere, wie beispielsweise Polyamid, aufweisen, führt die Zugabe wärmeleitfähiger Füllstoffe meist zu einem signifikanten Anstieg des Werkstoffpreises.

Bei der Compoundierung von thermoplastisch verarbeitbaren Polymeren mit Füllstoffen werden in der Regel Extruder verwendet. Es kommen beispielsweise Doppelschneckenextruder zum Einsatz, wobei die Schnecken neben der Materialförderung weitere Aufgaben übernehmen. Es können abhängig von der jeweiligen Anwendung in verschiedenen Zonen im Extruder Förderelemente, Mischelemente, Scherelemente, wie beispielsweise Knetblöcke, und Rückstauelemente in unterschiedlichen Ausführungsformen eingesetzt werden. Mischelemente und Scherelemente sorgen für eine gute Durchmischung und Homogenisierung von Polymerschmelze und Füllstoff.

Bei scherempfindlichen Füllstoffen kann abhängig von den gewählten Compoundierparametern, wie beispielsweise der Schneckenkonfiguration, Schneckendrehzahl und der Temperatur, eine Degradation bzw. eine teilweise Degradation des Füllstoffs stattfinden.

Füllstoffe können mit dem Polymer über den Haupttrichter oder auch über Seitendosierungen zugeführt werden. Die Zugabe des Füllstoffs über Seitendosierer ist dann besonders wichtig, wenn der Füllstoff scherempfindlich ist. Das Polymergranulat wird über die Hauptdosierung in die Einzugszone des Extruders dosiert und im weiteren Verlauf unter hohem Druck und starker Scherung aufgeschmolzen. Der scherempfindliche Füllstoff wird über eine Seitendosierung dem bereits aufgeschmolzenen Polymer zugeführt. Glasfasern werden beispielsweise nach dem Aufschmelzen des Polymers über eine Seitendosierung dem Compoundierprozess zugeführt, so dass diese eine möglichst geringe Scherung erfahren, um einen Bruch der Fasern zu vermeiden. Eine Verkürzung der Glasfasern führt zu einer Verminderung der mechanischen Eigenschaften von Bauteilen aus dem verstärkten Compound.

Weniger scherempfindliche Füllstoffe können über weitere Seitendosierungen bereits zu einem früheren Zeitpunkt in weiteren Seitendosierungen oder in der Hauptdosierung zusammen mit dem Polymer zugeführt werden. Wenig scherempfindliche Füllstoffe, oder Füllstoffe, die sehr gut homogenisiert werden müssen, wie beispielsweise Pigmente, verbleiben länger im Extruder und durchlaufen von der Position ihrer Zudosierung an alle noch folgenden Scher- und Homogenisierbereiche im Extruder.

Das Compound tritt am Ende des Extruders als Polymerschmelze durch Düsen in Form von Strängen aus dem Extruder aus. Nach dem Abkühlen und Erstarren des Strangs wird über einen Granulator ein Compoundgranulat erzeugt, was für die weitere Verarbeitung in Formgebungsprozessen vorgesehen ist.

Ein möglicher Formgebungsprozess für ungefülltes Polymergranulat und auch für Compoundgranulat aus Polymeren und Füllstoffen ist der Spritzguss. Das Polymergranulat oder das Compoundgranulat wird in der Spritzgussmaschine erneut aufgeschmolzen und unter hohem Druck in eine temperierte Form gefüllt. Dort erstarrt die Polymer- bzw. Compoundschmelze und das spritzgegossene Bauteil kann ausgeworfen werden. Bei Duroplasten und Elastomeren erfolgt in der Form die Vernetzung des Werkstoffs.

Beim Spritzguss besteht eine große Designfreiheit in der Formgebung, wobei komplexe Bauteile spritzgegossen werden können, die zahlreiche Funktionen übernehmen können. Die Polymere werden durch den Einsatz von Füllstoffen den jeweiligen Aufgaben und Funktionen, die sie erfüllen sollen, angepasst.

Beim Einsatz von Glasfasern in Compounds können mechanisch hochbelastbare Kunststoffbauteile hergestellt werden. Die Glasfasern werden während des Spritzgussvorgangs aufgrund von auftretenden Schergradienten, Quell- und Dehnströmungen orientiert. Durch diese Orientierung sind die Werkstoffeigenschaften, beispielsweise die mechanischen Eigenschaften, im spritzgegossenen Bauteil anisotrop.

Es hat sich gezeigt, dass bei der Herstellung von wärmeleitfähigen Polymer-Bornitrid-Compounds und deren Verarbeitung zu Bauteilen viele Einflussfaktoren eine entscheidende Auswirkung auf das Ergebnis der Wärmeleitfähigkeitsmessung haben. Zu diesen Einflussfaktoren gehören die Compoundierung, die Formgebung, die Probengeometrie, die Probennahme und die angewendete Messmethode.

Bei der Compoundierung können beispielsweise Ko-Kneter-Anlagen (Buss Kneter), Einschneckenextruder und Doppelschneckenextruder eingesetzt werden. Dabei kann über die Anlagenauslegung und/oder über die Prozessparameter eine schroffe oder schonende Compoundierung eingestellt werden. Zur Einstellung einer schrofferen Compoundierung können sowohl Dispergier- und Scherelemente wie beispielsweise Knetblöcke eingesetzt werden, zur Einstellung einer schonenderen Compoundierung kann beispielsweise auf Knetblöcke ganz verzichtet werden. Eine höhere Schneckendrehzahl führt zu einer vergleichsweise stärkeren Scherung des Compounds und des Füllstoffs im Compound, während eine niedrigere Schneckendrehzahl zu einer vergleichsweise schwächeren Scherung des Compounds und des Füllstoffs im Compound führt.

Bei der Compoundierung von Polymeren mit Bornitrid-Pulvern, beispielsweise mit sprühgetrocknetem Bornitrid-Pulver, zu Polymer-Bornitrid-Compounds hat sich gezeigt, dass bei Zusatz von 30 Vol.-% Bornitrid zu Polyamid (PA 6) eine schroffe Compoundierung mit starker Durchmischung und Scherung und guter Dispergierung des Füllstoffs zu vergleichsweise guten mechanischen Eigenschaften des Compounds führt, während die Wärmeleitfähigkeit vergleichsweise geringer ist. Umgekehrt führt eine schonende Compoundierung mit geringerer Scherung und schlechterer Dispergierung zu Compounds mit vergleichsweise besserer Wärmeleitfähigkeit und schlechteren mechanischen Eigenschaften.

Auch die anschließende Formgebung hat einen Einfluss auf das Ergebnis der Wärmeleitfähigkeit. Werden aus dem mit schroffer Compoundierung hergestellten Polymer-Bornitrid-Compound Proben über Warmpressen hergestellt, so liegt die Through-plane-Wärmeleitfähigkeit um 40 % höher als bei aus demselben Polymer-Bornitrid-Compound über Spritzguß hergestellten Zugprüfstäben. Die Werte für die Through-plane-Wärmeleitfähigkeit der warmgepressten Proben liegen um bis zu 100 % höher als bei Messungen an 2 mm dünnen spritzgegossenen Platten. Werden aus dem mit schonender Compoundierung hergestellten Polymer-Bornitrid-Compound dünne Platten einer Stärke von 2 mm über Spritzguß hergestellt, so liegt die Through-plane-Wärmeleitfähigkeit um bis zu 15 % höher als bei den spritzgegossenen 2 mm-Platten aus dem Compound mit der schroffen Compoundierung.

Weiterhin hat auch die Probengeometrie einen Einfluss auf das Ergebnis der Wärmeleitfähigkeit. Die am spritzgegossenen Zugstab einer Dicke von 4 mm gemessene Through-plane-Wärmeleitfähigkeit liegt um bis zu 50 % höher als die an der spritzgegossenen 2 mm dicken Platte gemessene Through-plane-Wärmeleitfähigkeit.

Beim Spritzgießen hat weiterhin die Art der Probennahme einen Einfluss auf das Ergebnis der Wärmeleitfähigkeit. So hat sich beispielsweise gezeigt, das bei schroffer Compoundierung und Spritzguß von 2 mm dünnen Platten die Wärmeleitfähigkeit angussnah, in Probenmitte und angussfern stark unterschiedlich sein kann. So kann die Wärmeleitfähigkeit bei hochgefüllten Compounds je nach Position der Probennahme um bis zu 20 % voneinander abweichen. Bei schroffer Compoundierung und Spritzguß von Zugprüfstäben kann die Wärmeleitfähigkeit einer angussnahen, direkt nach der ersten Probenschulter genommenen Probe um bis zu 10 % von einer angussfern, vor der zweiten Probenschulter genommenen Probe abweichen.

Schließlich hat auch die Messmethode einen Einfluss auf das Ergebnis der Through-plane-Wärmeleitfähigkeit. Wird die Through-plane-Wärmeleitfähigkeit mit der Hotdiskmethode an 4 mm dicken spritzgegossenen Platten gemessen, so ist das Messergebnis bei isotropen Füllstoffen um ca. 15 - 20 % höher als bei Messung mit der Laser-Flash-Methode an 2 mm dünnen spritzgegossenen Platten, während bei plättchenförmigen Füllstoffen mit der Hotdiskmethode eine mehr als 50 % höhere Wärmeleitfähigkeit gemessen wird.

Aus diesen Gründen können Ergebnisse aus Wärmeleitfähigkeitsmessungen nur miteinander verglichen werden, wenn die Herstellung des Compounds, die Formgebung des Compoundgranulats, die Probennahme und die Wärmeleitfähigkeitsmessung unter identischen Bedingungen erfolgen.

Hexagonale Bornitrid-Pulverpartikel, die als Primärpartikel und nicht als Agglomerate von Primärpartikeln vorliegen, sind in ihrer Wärmeleitfähigkeit anisotrop. Gut kristallines Bornitrid-Pulver hat eine plättchenförmige Partikelmorphologie. Die Bornitrid-Plättchen weisen typischerweise ein Aspekt-Verhältnis, d.h. ein Verhältnis Plättchendurchmesser zu Plättchendicke, von > 10 auf. Die Wärmeleitfähigkeit durch das Plättchen ist im Verhältnis zur Wärmeleitfähigkeit in Plättchenebene gering.

Werden Compounds aus einem thermoplastischen Polymer und Bornitrid-Pulver in Form von plättchenförmigen Bornitrid-Primärpartikeln hergestellt, liegen Bornitrid-Primärpartikel vorwiegend fein dispergiert vor. Wird ein solcher Compound spritzgegossen, richten sich insbesondere bei dünnwandigen Bauteilen plättchenförmige Bornitrid-Primärpartikel zu einem Großteil planparallel zur Oberfläche des Spritzgusswerkzeugs und planparallel zur Bauteiloberfläche aus. Die Ausrichtung der plättchenförmigen Bornitrid-Primärpartikel erfolgt aufgrund eines Schergefälles im Spritzgussbauteil zwischen werkzeugwandnahen und werkzeugwandferneren Bereichen. Die Ausrichtung der plättchenförmigen Bornitrid-Primärpartikel im spritzgegossenen Bauteil führt zu einer Anisotropie der Eigenschaften, insbesondere der Wärmeleitfähigkeit. Dabei liegt die Wärmeleitfähigkeit bei dünnwandigen Bauteilen einer Wandstärke von ≤ 3 bzw. ≤ 2 mm in Fließrichtung des Polymer-Compounds (in-plane) in der Regel bei mehr als dem vierfachen und bis zum siebenfachen und mehr der Wärmeleitfähigkeit durch die Bauteilwand (through-plane), bei Füllgraden von ≥ 30 Vol.-%. Die hohe Anisotropie in der Wärmeleitfähigkeit von thermoplastischen spritzgegossenen Bauteilen ist bei vielen Anwendungen von Nachteil. So ist beispielsweise die Abfuhr von Wärme, die flächig in eine Gehäusewand eingebracht wird, durch diese Gehäusewand bei geringer Through-plane-Wärmeleitfähigkeit ebenfalls gering. In Anwendungen, in denen die Wärme punktförmig in ein spritzgegossene Gehäuse eingebracht wird, ist diese Eigenschaft ebenfalls von Nachteil, da zwar eine schnelle Verteilung der Wärme in der Gehäusewand gelingt, aber nicht die Abfuhr der Wärme durch die Gehäusewand. Eine möglichst hohe Through-plane-Wärmeleitfähigkeit ist somit für alle Anwendungen wünschenswert, insbesondere, wenn die Wärme flächig abgeführt werden soll.

Bei Füllgraden unter 50 Vol.-% Bornitrid-Pulver im Compound wird in der Regel ein Wert von 1 W/m*K für die Through-plane-Wärmeleitfähigkeit bei spritzgegossenen dünnwandigen Bauteilen mit Wandstärken von 2 mm und darunter nicht überschritten.

Die Zugabe von wärmeleitfähigen Füllstoffen in ein Polymer führt zu einer Verminderung der mechanischen Eigenschaften, wie der Festigkeit und insbesondere der Zähigkeit, was eine Verminderung der Bruchdehnung und Schlagfestigkeit der Werkstoffe und daraus gefertigter Bauteile zur Folge hat. Die Füllstoffe führen zu Spannungsspitzen im Polymer, wenn eine mechanische Last am Bauteil anliegt. Diese Spannungsspitzen führen dann bei Erhöhung der Last zur lokalen Rissbildung und durch Risswachstum zu einem Bauteilversagen. Die Rissbildung und das Bauteilversagen treten bei wärmeleitfähig modifizierten Polymeren bei geringeren Lastniveaus bzw. geringeren Dehnungen ein als bei ungefüllten Polymeren. Die Verminderung von Festigkeit und Zähigkeit ist umso größer, je höher der Füllstoffgehalt an wärmeleitfähigen Füllstoffen ist.

Der Wärmestrom Q in einem Bauteil kann gemäß Gleichung 1 beschrieben werden, wobei der Wärmedurchgangskoeffizient k den Wärmeübergangskoeffizienten α, die Wärmeleitfähigkeit λ sowie Wandstärke s, wie in Gleichung 2 dargestellt, berücksichtigt.

$$Q = k \times A \times \Delta T \qquad (1)$$

$$k = \frac{1}{\dfrac{1}{\alpha_{contact\,1}} + \dfrac{s_1}{\lambda_1} + \dfrac{1}{\alpha_{contact\,2}}} \qquad (2)$$

Eine Erhöhung des Wärmedurchgangs beispielsweise zur Senkung der Temperatur in einem Gehäuse kann folglich, neben der Erhöhung der Wärmeleitfähigkeit des Werkstoffs, durch eine Verringerung der Bauteilwandstärke erfolgen. Wenn ein Bauteil neben der Wärmeleitfunktion auch eine mechanische Funktion erfüllt, sind der Verringerung der Bauteilwandstärke jedoch Grenzen gesetzt. Kann ein Werkstoff mit höheren mechanischen Eigenschaften, wie zum Beispiel der Festigkeit, eingesetzt werden, ermöglicht dies im Umkehrschluss wiederum eine Verringerung der Wandstärke und somit eine Erhöhung des Wärmestroms durch die Bauteilwand. Eine Verringerung der Wandstärke weist zudem weitere Vorteile, wie eine Gewichts- und Kostenersparnis auf. Eine Gewichtsersparnis führt bei einem Bauteil, das beispielsweise in einem Automobil zum Einsatz kommt, zu einer Verminderung des Schadstoffausstoßes.

Die Verwendung von hohen Füllgraden an Füllstoffen im Polymer führt zu einer Erhöhung der Schmelzeviskosität und somit einer Verminderung der Fließfähigkeit.
Um ein Bauteil mit geringer Wandstärke, zum Beispiel mittels Spritzgießen, fertigen zu können, ist jedoch eine gute Fließfähigkeit des Polymercompounds gefordert, um eine vollständige Formteilfüllung zu erzielen.

Folglich sind in vielen Anwendungen polymerer Funktionswerkstoffe ausgeglichene Werkstoffeigenschaften bzgl. Wärmeleitfähigkeit, mechanischen Eigenschaften, Fließfähigkeit und Werkstoffkosten erstrebenswert.

Bornitrid kann auch in Form von Agglomeraten von plättchenförmigen Primärpartikeln als wärmeleitender Füllstoff in Polymeren eingesetzt werden. Verschiedene Verfahren zur Herstellung von Bornitrid-Agglomeraten, beispielsweise mittels Sprühtrocknen, isostatischem Pressen oder Pressen und anschließendem Sintern sind beschrieben in der US 2006/0 127 422 A1, WO 03/013 845 A1, US 6,048,511, EP 0 939 066 A1, US 2002/0 006 373 A1, US 2004/0 208 812 A1, WO 2005/021 428 A1, US 5,854,155 und US 6,096,671.

Bei Verwendung derartiger Bornitrid-Agglomerate findet während der Compoundierung im Doppelschneckenextruder und/oder während des Spritzgusses eine starke Degradation der Bornitrid-Agglomerate statt, d.h. zu einem Aufbrechen des überwiegenden Teils der Agglomerate in die Bornitrid-Primärpartikel oder in Agglomeratfragmente, wodurch es abhängig von den Prozessbedingungen zu starken Schwankungen und insbesondere zu einer Absenkung in der z-Wärmeleitfähigkeit spritzgegossener Platten kommen kann. Auf diese Problematik wurde in "Boron Nitride in Thermoplastics: Effect of loading, particle morphology and processing conditions" (Chandrashekar Raman, Proceedings of the NA-TAS Annual Conference on Thermal Analysis and Applications (2008), 36th 60/1-60/10) hingewiesen.

In dieser Untersuchung wurden plättchenförmige und agglomerierte Bornitrid-Pulver mit einem thermoplastischen Polymer (Dow 17450 HDPE) compoundiert. Die Compoundierung wurde in einem Doppelschneckenextruder (Werner & Pfleiderer ZSK-30, L/D Verhältnis 28,5, 2 mm Düse) bei einer Temperatur von 190 °C mit einer Schneckendrehzahl von 100 U/min durchgeführt.

Bei Einsatz der sphärischen Bornitrid-Agglomerate PTX60 (Momentive Performance Materials, mittlere Agglomeratgröße $d_{50}$ = 60 $\mu$m) im HDPE-Compound wurde gezeigt, dass die Verwendung einer Standard-Schneckenkonfiguration mit zwei Mischzonen zu einer stärkeren Degradation der PTX-60 Agglomerate führt als die Verwendung einer modifizierten Schnecke mit nur einer Mischzone. Dies wird besonders bei Füllgraden von 39 Vol.-% (60 Gew.-%) deutlich. Die Through-plane-Wärmeleitfähigkeit gemessen an der Zugstab-Spritzgussprobe des Compounds mit schrofferer Verarbeitung zeigt einen um etwa 25 % niedrigeren Wert (von 1,5 statt 2,05 W/m*K) als die Probe, bei der während der Compoundierung die schonendere Schneckenkonfiguration eingesetzt wurde. Werden aus dem Compound aus der Herstellung mit der Standard-Schneckenkonfiguration für die Messung der Wärmeleitfähigkeit dünne, 1 mm dicke Platten spritzgegossen anstelle von 3,2 mm dicken Zugstäben, sinkt die Through-plane-Wärmeleitfähigkeit bei einem Füllgrad von 39 Vol.-% (60 Gew.-%) von 1,5 W/m*K auf 0,85 W/m*K. Die Wärmeleitfähigkeit ist bei dieser Verarbeitung ähnlich niedrig, wie bei der Verwendung der Primärpartikel PT120 im Compound bei gleichem Füllgrad. Diese Absenkung der Wärmeleitfähigkeit führen die Autoren auf die Degradation der BN-Agglomerate zurück.

In den beschriebenen Versuchen hat sich gezeigt, dass die eingesetzten Bornitrid-Agglomerate im Compoundierprozess oder im Spritzgussprozess so weit degradiert werden, dass sie zu einem großen Anteil in Form von Primärpartikeln im spritzgegossenen Compound vorliegen, und dass die Agglomeratform für hohe Through-plane-Wärmeleitfähigkeiten in vielen Anwendungsfällen, insbesondere beim Spritzguss dünner Platten bzw. Gehäusewände, nicht genutzt werden kann.

In der DE 10 2010 050 900 A1 wird ein Verfahren zur Herstellung texturierter Bornitrid-Agglomerate beschrieben, bei denen die Bornitrid-Plättchen im Agglomerat eine Vorzugsorientierung aufweisen.

Der Erfindung liegt daher die Aufgabe zugrunde, unter Überwindung der Nachteile des Standes der Technik, kostengünstige Polymer-Bornitrid-Compounds zur Verfügung zu stellen, mit denen prozesssicher hohe Through-plane-Wärmeleitfähigkeitswerte sowie hohe In-plane-Wärmeleitfähigkeitswerte sowie gute mechanische Eigenschaften, insbesondere Festigkeiten in dünnwandigen Bauteilen erhalten werden können.

Die oben genannte Aufgabe wird gelöst durch das Bauteil gemäß Anspruch 1, das Polymer-Bornitrid-Compound gemäß Anspruch 19 und die Verwendung des Bauteils gemäß Anspruch 20. Bevorzugte bzw. besonders zweckmäßige Ausführungsformen des Bauteils sind in den Unteransprüchen 2 - 18 und in den Punkten 1 - 36 angegeben.

Gegenstand der Erfindung ist somit ein Bauteil hergestellt aus einem Polymer-Bornitrid-Compound, wobei das Polymer-Bornitrid-Compound zumindest einen Polymerwerkstoff, zumindest einen wärmeleitenden Füllstoff und zumindest einen Verstärkungsfüllstoff umfasst, wobei der zumindest eine wärmeleitende Füllstoff Bornitrid-Agglomerate umfasst, und wobei die Bornitrid-Agglomerate plättchenförmige hexagonale Bornitrid-Primärpartikel umfassen, welche miteinander mittels einer anorganischen Bindephase, welche wenigstens ein Nitrid und/oder Oxinitrid umfasst, verbunden sind.

Gegenstand der Erfindung ist weiterhin ein Polymer-Bornitrid-Compound zur Herstellung eines solchen Bauteils, wobei das Polymer-Bornitrid-Compound zumindest einen Polymerwerkstoff, zumindest einen wärmeleitenden Füllstoff und zumindest einen Verstärkungsfüllstoff umfasst, und wobei der zumindest eine wärmeleitende Füllstoff Bornitrid-Agglomerate umfasst.

Gegenstand der Erfindung ist weiterhin die Verwendung eines solchen Bauteils zur Wärmeleitung zur Temperierung von Komponenten oder Baugruppen, vorzugsweise von elektronischen Komponenten oder Baugruppen und die Verwendung eines solchen Bauteils zur Aufnahme und/oder Übertragung von mechanischen Lasten.

Durch die erfindungsgemäßen Polymer-Bornitrid-Compounds kann der Nachteil der niedrigen Through-plane-Wärmeleitfähigkeit und der geringen Lastaufnahme von dünnwandigen Bauteilen aus Polymer-Bornitrid-Compounds überwunden werden.

Die Through-Plane-Wärmeleitfähigkeit ist die in der Through-Plane-Richtung, also senkrecht zur Plattenebene, gemessene Wärmeleitfähigkeit. Die In-Plane-Wärmeleitfähigkeit ist die in In-Plane-Richtung, also in der Plattenebene, gemessene Wärmeleitfähigkeit.

Es hat sich überraschenderweise gezeigt, dass durch die erfindungsgemäßen Polymer-Bornitrid-Compounds die Through-plane-Wärmeleitfähigkeit von spritzgegossenen dünnwandigen Bauteilen signifikant erhöht werden kann, bei gleichzeitig guter In-plane-Wärmeleitfähigkeit.

Bei gleichem Anteil an Bornitrid können in den erfindungsgemäßen Bauteilen mit den Bornitrid-Agglomeraten höhere Wärmeleitfähigkeitswerte als mit nicht agglomerierten Bornitrid-Pulvern erhalten werden. Mit den Bornitrid-Agglomeraten können höhere Füllgrade in Bornitrid-Polymer-Compounds und in daraus hergestellten Bauteilen als mit nicht agglomerierten Bornitrid-Pulvern erhalten werden.

Die erfindungsgemäßen Polymer-Bornitrid-Compounds können überraschenderweise auch mit vergleichsweise schroffer Compoundierung verarbeitet werden, ohne dass eine starke Degradation der verwendeten Bornitrid-Agglomerate auftritt. Auch beim Spritzgießen der dünnwandigen Bauteile kommt es nicht zu einer starken Degradation der Bornitrid-Agglomerate. Die erfindungsgemäßen Bauteile können prozesssicher mit reproduzierbaren Wärmeleiteigenschaften und mechanischen Eigenschaften hergestellt werden.

Die zur Herstellung der erfindungsgemäßen Bauteile eingesetzten Bornitrid-Agglomerate weisen eine hohe Agglomeratstabilität auf. Während der Compoundierung im Doppelschneckenextruder werden die eingesetzten Bornitrid-Agglomerate überraschenderweise nicht bzw. nicht vollständig durch Scherung an Mischelementen und Scher-/Dispergierelementen degradiert. Auch bei hohen Füllstoffgehalten, die zu hohen Wärmeleitfähigkeiten im Bauteil führen und bei denen das Problem der Füllstoffdegradation besonders stark ist, kommt es nicht zu einer starken Degradation der eingesetzten Bornitrid-Agglomerate und diese werden nicht bzw. nur teilweise zu Primärpartikeln oder Agglomeratfragmenten degradiert.

Die erfindungsgemäßen Polymer-Bornitrid-Compounds sind darin vorteilhaft, dass sie bei Verarbeitung zu dünnen Platten einer Stärke von $\leq$ 3 mm vorzugsweise ein Anisotropieverhältnis von 1,5 bis 4 aufweisen. Dies ist überraschend, da bei Verwendung von weitgehend isotropen Bornitrid-Agglomeraten zu erwarten gewesen wäre, dass die Wärmeleitfähigkeit in Compounds und in daraus spritzgegossenen Platten und Bauteilen im Wesentlichen isotrop ist. Auch bei einer schroffen Compoundierung bleibt dieses Verhältniss für spritzgegossene dünne Platten erhalten, auch wenn ein Teil der Agglomerate degradiert.

Auch bei Verwendung von anisotropen plättchen- bzw. schuppenförmigen Bornitrid-Agglomeraten mit einem Aspektverhältnis > 10 ist das an den spritzgegossenen dünnen Platten vorzugsweise erhaltene Anisotropieverhältnis von 1,5 bis 4 für den Fachmann überraschend. Zu erwarten wäre gewesen, dass sich die plättchenförmigen Bornitrid-Agglomerate in den dünnen Platten ausrichten, was mit einer Verringerung der Through-plane-Wärmeleitfähigkeit zu Gunsten einer erhöhten In-plane-Wärmeleitfähigkeit und einem höheren Anisotropieverhältnis verbunden wäre.

Das Anisotropieverhältnis ist deutlich kleiner als bei Verwendung von gut kristallinem plättchenförmigem Bornitrid-Pulver.

Für die Wärmeabfuhr ist das Anisotropieverhältnis der Wärmeleitfähigkeit von 1,5 bis 4 günstig, insbesondere bei dünnen Platten oder Gehäusewänden.

Weiterhin war nicht zu erwarten, dass auch bei Einsatz von Füllstoffkombinationen von Bornitrid-Agglomeraten, zumindest einem Verstärkungsfüllstoff und zumindest einem Sekundärfüllstoff für die erfindungsgemäßen Bauteile das bevorzugte Anisotropieverhältnis der Wärmeleitfähigkeit von 1,5 - 4 erhalten bleibt. Unter einem Sekundärfüllstoff ist dabei ein von Bornitrid verschiedener, die Wärmeleitfähigkeit erhöhenden Füllstoff zu verstehen, der zusätzlich zu den Bornitrid-Agglomeraten als wärmeleitendem Füllstoff in dem Polymer-Bornitrid-Compound enthalten ist. Dies ist überraschend, da der Fachmann erwartet hätte, dass das Anisotropieverhältnis bei Einsatz der im Wesentlichen isotropen Sekundärfüllstoffe signifikant sinkt. Weiter überraschend ist, dass sowohl die Through-plane-Wärmeleitfähigkeit als auch die In-plane-Wärmeleitfähigkeit mit Füllstoffkombinationen von Bornitrid-Agglomeraten und Sekundärfüllstoffen in spritzgegossenen Platten höher ist, als die rechnerisch addierten Werte der Wärmeleitfähigkeiten der spritzgegossenen Platten aus den Compounds der Polymere mit den Einzelkomponenten, also des Compounds aus Polymer und Bornitrid-Agglomeraten sowie des Compounds aus Polymer und Sekundärfüllstoff.

Bei Einsatz von Füllstoffkombinationen von Bornitrid-Agglomeraten, Verstärkungsfüllstoffen und Sekundärfüllstoffen hat sich überraschenderweise gezeigt, dass sich bei gleichem Anteil an Bornitrid-Agglomeraten bei Einsatz von zusätzlichen Sekundärfüllstoffen die Wärmeleitfähigkeit gegenüber der Verwendung von Bornitrid-Agglomeraten alleine nicht nur signifikant in Through-plane-Richtung erhöht, sondern dass gleichzeitig eine starke Erhöhung in In-plane-Richtung ebenfalls erfolgt.

Weiterhin ist überraschend, dass zur Herstellung der erfindungsgemäßen Bauteile Polymer-Bornitrid-Compounds mit nicht zu hohen Füllgraden an wärmeleitenden Füllstoffen und Verstärkungsfüllstoffen eingesetzt werden können. Es ist daher möglich, zur weiteren Eigenschaftsanpassung der gefüllten Polymerwerkstoffe weitere Additive und Füllstoffe zuzusetzen, so dass bei den meisten gängigen Polymeren Gesamtfüllgrade von $\leq$ 50 Vol.-% und beispielsweise für TPE-Polymere (thermoplastische Elastomere) von $\leq$ 70 Vol.-% möglich sind.

Zudem ist überraschend, dass die erfindungsgemäßen Bauteile mit wärmeleitenden Füllstoffen und Verstärkungsfüllstoffen sowohl erhöhte Wärmeleitfähigkeiten wie auch mechanische Eigenschaften (insbesondere Festigkeit) aufweisen, so dass eine weitere Erhöhung des Wärmestroms in Through-plane-Richtung durch eine Verringerung der Wandstärke möglich ist. Diese Wandstärkenverringerung ermöglicht zudem eine Gewichts- und Kostenreduzierung durch verminderten Werkstoffeinsatz.

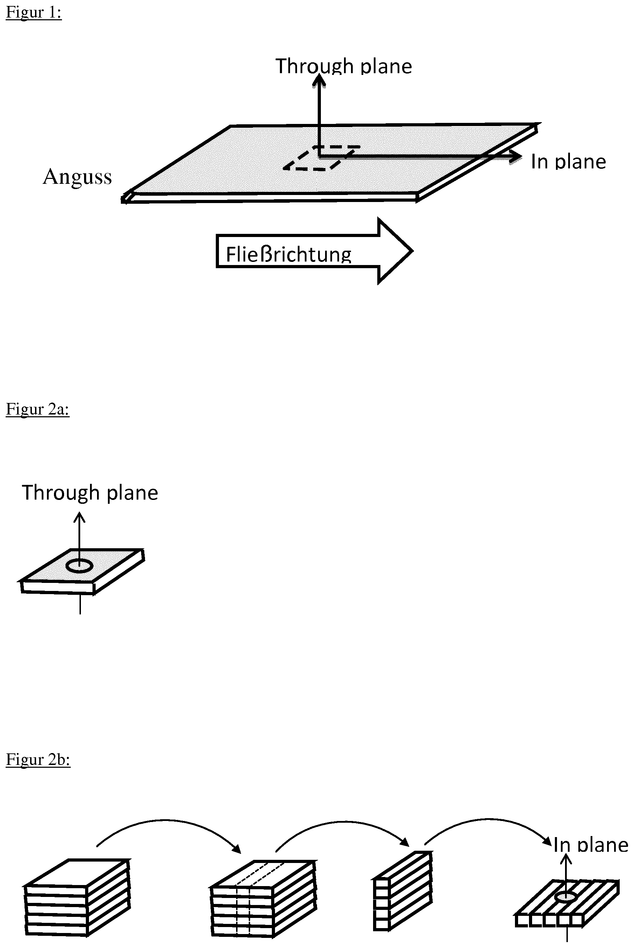

Figur 1 zeigt eine dünne spritzgegossene Platte mit den Abmessungen 80x80x2 mm$^3$ mit Anguss und den Richtungen In-plane und Through-plane, in denen die Wärmeleitfähigkeitswerte (In-plane-Wärmeleitfähigkeit und Through-plane-Wärmeleitfähigkeit) ermittelt werden.

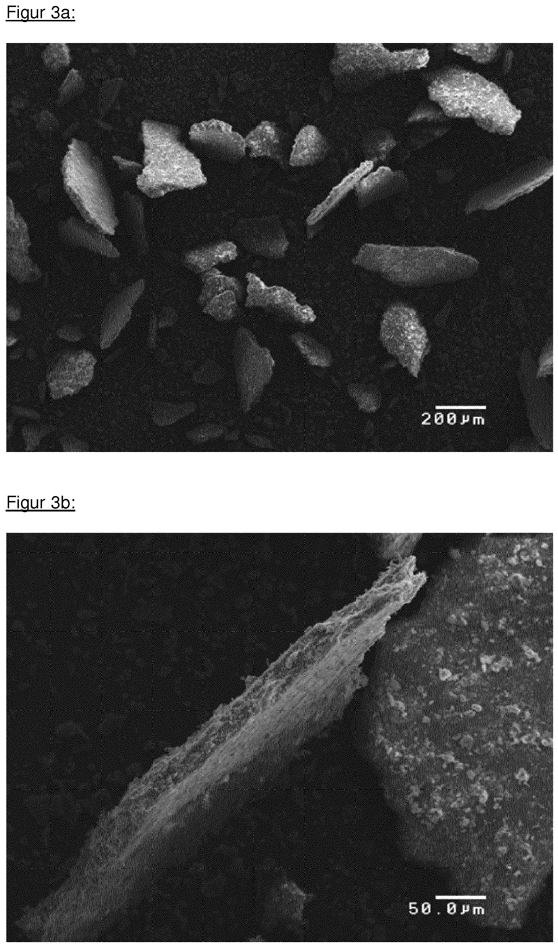

Figuren 2 a und b zeigen die zur Messung der Through-plane- und In-plane-Wärmeleitfähigkeit verwendeten Proben. Figur 2 a zeigt eine Probe mit den Abmessungen 10x10x2 mm³, die aus der Mitte der spritzgegossenen Platte von Figur 3 präpariert wurde und die zur Messung der Through-plane-Wärmeleitfähigkeit verwendet wird. Figur 2 b zeigt die Präparation einer Probe zur Messung der In-plane-Wärmeleitfähigkeit. Zunächst wird ein Plattenstapel von Proben der Abmessungen 10x10x2 mm³ durch Verkleben mit Sekundenkleber hergestellt, wobei diese Proben aus spritzgegossenen Platten der Abmessungen 80x80x2 mm³ präpariert wurden. Aus dem Plattenstapel wird eine Probe parallel zur Through-plane-Richtung und senkrecht zur Fließrichtung der spritzgegossenen Platten präpariert. An dieser Probe wird die In-Plane Wärmeleitfähigkeit ermittelt.

Figuren 3 a und b zeigen REM-Aufnahmen der für die erfindungsgemäßen Bauteile und Polymer-Bornitrid-Compounds eingesetzten Bornitrid-Agglomerate aus Beispiel 1. Figur 3 a zeigt eine Übersichtsaufnahme der Bornitrid-Agglomerate in der Siebfraktion < 500 μm. Figur 3 b zeigt eine Bruchfläche eines Agglomerats mit einer Dicke von 30 μm.

Wie oben bereits ausgeführt, ist die Through-Plane-Wärmeleitfähigkeit die in der Through-Plane-Richtung, also senkrecht zur Plattenebene, gemessene Wärmeleitfähigkeit. Die In-Plane-Wärmeleitfähigkeit ist die in In-Plane-Richtung, also in der Plattenebene, gemessene Wärmeleitfähigkeit.

Die Through-plane-Wärmeleitfähigkeit der erfindungsgemäßen Bauteile und Polymer-Bornitrid-Compounds beträgt vorzugsweise wenigstens 1 W/m*K, weiter vorzugsweise wenigstens 1,2 W/m*K, weiter vorzugsweise wenigstens 1,5 W/m*K und insbesondere bevorzugt wenigstens 1,8 W/m*K. Die Wärmeleitfähigkeit wird gemäß DIN EN ISO 22007-4 an scheibenförmigen spritzgegossenen Proben einer Dicke von 2 mm gemessen.

Die In-plane-Wärmeleitfähigkeit der erfindungsgemäßen Bauteile und Polymer-Bornitrid-Compounds beträgt vorzugsweise wenigstens 1,5 W/m*K, weiter vorzugsweise wenigstens 1,8 W/m*K, weiter vorzugsweise wenigstens 2,2 W/m*K und insbesondere bevorzugt wenigstens 2,7 W/m*K.

Für die Messung der In-plane-Wärmeleitfähigkeit werden scheibenförmige spritzgegossene Proben einer Stärke von 2 mm aufeinandergestapelt und miteinander verklebt. Aus dem so präparierten Plattenstapel wird parallel zur Through-plane-Richtung und senkrecht zur Fließrichtung der spritzgegossenen Platten eine 2 mm dünne Probe mit den Maßen 2x10x10 mm³ präpariert. Die Messung der In-plane-Wärmeleitfähigkeit erfolgt gemäß DIN EN ISO 22007-4 an der so präparierten 2 mm dicken Probe.

Das Anisotropieverhältnis der In-plane-Wärmeleitfähigkeit zur Through-plane-Wärmeleitfähigkeit der erfindungsgemäßen Bauteile und Bornitrid-Polymer-Compounds beträgt vorzugsweise wenigstens 1,5 und höchstens 4, weiter vorzugsweise wenigstens 1,5 und höchstens 3,5, weiter vorzugsweise wenigstens 1,5 und höchstens 3,0 und insbesondere bevorzugt wenigstens 1,5 und höchstens 2,5.

Das Anisotropieverhältnis wird berechnet, in dem die wie beschrieben ermittelte In-plane-Wärmeleitfähigkeit durch die wie beschrieben gemessene Through-plane-Wärmeleitfähigkeit geteilt wird.

Die Through-plane-Wärmeleitfähigkeit des erfindungsgemäßen Bauteils und Polymer-Bornitrid-Compounds ist vorzugsweise um wenigstens 0,8 W/m*K, weiter vorzugsweise um wenigstens 1 W/m*K, weiter vorzugsweise um wenigstens 1,3 W/m*K und insbesondere bevorzugt um wenigstens 1,6 W/m*K höher als die Wärmeleitfähigkeit des Polymerwerkstoffs ohne wärmeleitenden Füllstoff.

Die In-plane-Wärmeleitfähigkeit des erfindungsgemäßen Bauteils und Polymer-Bornitrid-Compounds ist vorzugsweise um wenigstens 1,3 W/m*K, weiter vorzugsweise um wenigstens 1,6 W/m*K, weiter vorzugsweise um wenigstens 2,0 W/m*K und insbesondere bevorzugt um wenigstens 2,5 W/m*K höher als die Wärmeleitfähigkeit des Polymerwerkstoffs ohne wärmeleitenden Füllstoff.

Die Festigkeit der erfindungsgemäßen Bauteile und Polymer-Bornitrid-Compounds beträgt vorzugsweise wenigstens 50 N/mm², weiter vorzugsweise wenigstens 75 N/mm², weiter vorzugsweise wenigstens 100 N/mm² und insbesondere bevorzugt wenigstens 125 N/mm².

Die Messung der mechanischen Eigenschaften erfolgt im Zugversuch gemäß DIN EN ISO 527 an trocken konditionierten Normzugstäben bei 25 °C, 50 % Luftfeuchtigkeit.

Der Anteil an Bornitrid-Agglomeraten im erfindungsgemäßen Bauteil und Polymer-Bornitrid-Compound beträgt vorzugsweise wenigstens 5 Vol.-%, weiter vorzugsweise wenigstens 10 Vol.-%, weiter vorzugsweise wenigstens 15 Vol.-% und besonders bevorzugt wenigstens 20 Vol.-%, bezogen auf das Gesamtvolumen des Polymer-Bornitrid-Compounds.

Der Anteil an Bornitrid-Agglomeraten im erfindungsgemäßen Bauteil und Polymer-Bornitrid-Compound beträgt vorzugsweise höchstens 70 Vol.-%, weiter vorzugsweise höchstens 60 Vol.-% und besonders bevorzugt höchstens 50 Vol.-%, bezogen auf das Gesamtvolumen des Polymer-Bornitrid-Compounds.

Für das erfindungsgemäße Bauteil und Polymer-Bornitrid-Compound werden als Polymerwerkstoff bevorzugt thermoplastische Polymere eingesetzt. Dies sind insbesondere die thermoplastischen Werkstoffe Polyamid (PA), Polybutylentherphthalat (PBT), Polyethylentherephthalat (PET), Polyphenylensulfid (PPS), Polycarbonat (PC), Polypropylen (PP), thermoplastische Elastomere (TPE), thermoplastische Polyurethan-Elastomere (TPU) und Polyätherätherketone (PEEK), flüssigkristalline Polymere (LCP) und Polyoxymethylen (POM).

Als Polymerwerkstoff können auch duroplastische Formmassen, wie beispielsweise Phenolformaldehydformmassen (z.B. Vincolyt X655, SBHPP, Gent, Belgien), Epoxidformmassen (z.B. Epoxidur 3581, Raschig, Ludwigshafen, Deutschland), Melaminformaldehydformmassen (z.B. Melopas MF150, Raschig, Ludwigshafen, Deutschland), Harnstoffformaldehydformmassen (z.B. Urecoll, BASF, Ludwigshafen, Deutschland), Bulk Molding Compound (BMC) (z.B. Lomix 0204, Lorenz, Bad Bramstedt, Deutschland) und Sheet Molding Compund (SMC) (z.B. Lomix 0108, Lorenz, Bad Bramstedt, Deutschland) eingesetzt werden.

Als Polymerwerkstoff können auch Elastomere, wie Liquid Silicon Rubber (LSR) (z.B. Elastosil, Wacker Chemie, Burghausen, Deutschland), Ethylen-Propylen-Dien-Kautschuk (EPDM), Nitrilkautschuk (NBR), Hydrierter Nitrilkautschuk (HNBR), Fluorkarbon-Kautschuk (FKM), Acrylat-Kautschuk (ACM) und Ethylen-Acrylat-Kautschuk (AEM) eingesetzt werden.

Als Polymerwerkstoff können auch Gießharze (z.B. Polyesterharz, Polyurethanharz, Epoxidharz, Silikonharz, Vinylesterharz, Phenolharz, Acrylharz), (z.B. Q1-9226, Dow Corning, Wiesbaden, Deutschland), Transfermoldmasse (z.B. Polyesterharz, Polyurethanharz, Epoxidharz, Silikonharz, Vinylesterharz, Phenolharz, Acrylharz), (z.B. KMC-4800 Shin Etsu, Japan) und Wärmeleitkleber (z.B. Polyesterharz, Polyurethanharz, Epoxidharz, Silikonharz, Vinylesterharz, Phenolharz, Acrylharz), (z,B. TC 2030, Dow Corning, Wiesbaden, Deutschland) eingesetzt werden.

Für das erfindungsgemäße Bauteil und Polymer-Bornitrid-Compound werden Bornitrid-Agglomerate mit einer hohen Agglomeratstabilität eingesetzt. Bornitrid-Agglomerate mit einer hohen Agglomeratstabilität werden auch unter Einwirkung von hohen Scherkräften, wie sie bei der Compoundierung der Polymere zusammen mit den Bornitrid-Füllstoffen insbesondere bei hohen Füllgraden auftreten, nur teilweise zu Primärpartikeln oder Agglomeratfragmenten degradiert. Die vorteilhaften Eigenschaften des erfindungsgemäßen Polymer-Bornitrid-Compounds, insbesondere das Anisotropieverhältnis, bleiben trotz der teilweisen Degradation erhalten.

Die Stabilität der Agglomerate lässt sich beispielsweise in Ultraschalluntersuchungen bei gleichzeitiger Messung der Agglomeratgröße über Lasergranulometrie untersuchen, wobei durch die Einwirkung des Ultraschalls das Agglomerat mit der Zeit zerfällt. Der Zerfall der Agglomerate wird über die zeitliche Veränderung der Agglomeratgröße aufgezeichnet, wobei sich je nach Agglomeratstabilität unterschiedliche Kurvenverläufe ausbilden. Weiche Agglomerate zerfallen dabei schneller als mechanisch stabilere Agglomerate.

Für die Messung der Agglomeratstabilität werden Bornitrid-Agglomerate kleiner 200 $\mu$m gebrochen und der Feinanteil < 100 $\mu$m wird abgesiebt. An der so erhaltenen Siebfraktion 100 - 200 $\mu$m wird mittels eines Lasergranulometers (Mastersizer 2000 mit Dispergiereinheit Hydro 2000S, Malvern, Herrenberg, Deutschland) die Agglomeratstabilität bestimmt. Dazu wird als Dispergiermedium eine Lösung aus einem Netzmittel in Wasser (Mischung aus 2 ml eines Spülmittels (G 530 Spülfix, BUZIL-Werk Wagner GmbH & Co. KG, Memmingen) und 0,375 ml Imbentin (Polyethylenglycolalkylether) in 10 1 destilliertem Wasser) verwendet. In einem Schnappdeckelgläschen (8 ml) werden 10 - 20 mg der Agglomerate mit 6 ml des Dispergiermediums durch Schütteln dispergiert. Aus der Probe wird mit einer Pipette Suspension entnommen und in die Nassmesszelle des Lasergranulometers getropft, bis die Laserverdunklung 5 % erreicht (spezifizierter Bereich: 5 - 30%). Es wird mit einer Messung ohne Ultraschall begonnen und alle 15 Sekunden wird je eine weitere Messung mit Ultraschall durchgeführt, wobei die über die Gerätesoftware auf Werte zwischen 0 und 100 % einstellbare Ultraschallleistung der Dispergiereinheit jeweils auf 5 % der Maximalleistung eingestellt wird. Insgesamt werden zehn Messungen durchgeführt. Bei den Messungen läuft der Rührer der Dispergiereinheit mit 1750 U/min. Als Maß für die Agglomeratstabilität wird der Quotient aus dem $d_{90}$-Wert nach den zehn Messungen und dem $d_{90}$-Wert der ersten Messung herangezogen (multipliziert mit 100 zur Angabe in Prozent). Die hier beschriebene Messmethode wird im Folgenden auch als "Ultraschallmethode" bezeichnet.

Die Agglomeratstabilität der für die erfindungsgemäßen Polymer-Bornitrid-Compounds und die erfindungsgemäßen Bauteile eingesetzten Bornitrid-Agglomerate beträgt vorzugsweise wenigstens 40 %, weiter bevorzugt wenigstens 50 % und insbesondere bevorzugt wenigstens 60 %. Die Agglomeratstabilität wird dabei mit der oben beschrieben Ultraschallmethode bestimmt.

Die spezifische Oberfläche (BET) der für die erfindungsgemäßen Polymer-Bornitrid-Compounds und die erfindungsgemäßen Bauteile eingesetzten Bornitrid- Agglomerate beträgt vorzugsweise 20 m$^2$/g und weniger, weiter vorzugsweise 10 m$^2$/g und weniger.

Die für die erfindungsgemäßen Polymer-Bornitrid-Compounds und die erfindungsgemäßen Bauteile eingesetzten Bornitrid-Agglomerate sind im Unterschied zu nicht agglomerierten Bornitrid-Pulvern rieselfähig und gut dosierbar.

In einer bevorzugten Ausführungsform des erfindungsgemäßen Bauteils und Polymer-Bornitrid-Compounds werden als Bornitrid-Agglomerate weitgehend isotrope nitridgebundene Bornitrid-Agglomerate eingesetzt. Bei diesen Bornitrid-Agglomeraten handelt es sich um Agglomerate von plättchenförmigen hexagonalen Bornitrid-Primärpartikeln, wobei die hexagonalen Bornitrid-Primärpartikel miteinander mittels einer anorganischen Bindephase verbunden sind. Die anorganische Bindephase umfasst wenigstens ein Nitrid und/oder Oxinitrid. Bei den Nitriden und Oxinitriden handelt es sich vorzugsweise um Verbindungen der Elemente Aluminium, Silizium, Titan und Bor. Diese Bornitrid-Agglomerate können auch als isotrope nitridgebundene Bornitrid-Agglomerate bzw. als isotrope Bornitrid-Agglomerate mit nitridischer Bindephase bezeichnet werden. Die Bornitrid-Plättchen sind in diesen Agglomeraten im Wesentlichen ohne Vorzugsrichtung zueinander orientiert, so dass sie weitgehend isotrope Eigenschaften haben. Die isotropen nitridgebundenen Bornitrid-Agglomerate werden im Folgenden auch als Bornitrid-Hybrid-Agglomerate bezeichnet.

Zur Herstellung solcher nitridgebundenen isotropen Bornitrid-Agglomerate wird Bornitrid-Ausgangspulver in Form von Bornitrid-Primärpartikeln oder amorphem Bornitrid mit Bindephasen-Rohstoffen vermischt, zu Granulaten oder Formkörpern verarbeitet und diese anschließend einer Temperaturbehandlung bei einer Temperatur von mindestens 1600°C in einer Nitridieratmosphäre unterzogen und die erhaltenen Granulate oder Formkörper gegebenenfalls zerkleinert und/oder fraktioniert.

Vorzugsweise handelt es sich bei den in der Bindephase enthaltenen Nitriden und Oxinitriden um Aluminiumnitrid (AlN), Aluminiumoxinitrid, Titannitrid (TiN), Siliziumnitrid ($Si_3N_4$) und Bornitrid (BN). vorzugsweise um Aluminiumnitrid, Aluminiumoxinitrid, Titannitrid und/oder Siliziumnitrid, weiter vorzugsweise um Aluminiumnitrid und/oder Aluminiumoxinitrid. Besonders bevorzugt enthält die Bindephase Aluminiumnitrid.

Die Nitride und Oxinitride der Bindephase können amorph, teilkristallin oder kristallin sein. Vorzugsweise ist die Bindephase kristallin.

Die nitridische Bindephase kann zusätzlich auch oxidische Phasen enthalten, wie beispielsweise Boroxid ($B_2O_3$), Aluminiumoxid ($Al_2O_3$), Siliziumdioxid ($SiO_2$), Titandioxid ($TiO_2$), Yttriumoxid ($Y_2O_3$), Magnesiumoxid (MgO), Calciumoxid (CaO) und Seltenerdmetalloxide.

Weiterhin kann die Bindephase zusätzlich noch Borate enthalten, beispielsweise Aluminiumborate oder Calciumborate. Außerdem kann die Bindephase noch Verunreinigungen enthalten, beispielsweise Kohlenstoff, metallische Verunreinigungen, elementares Bor, Boride, Borcarbid oder andere Carbide wie beispielsweise Siliziumcarbid.

Der Anteil der nitridischen Bindephase in den nitridgebundenen isotropen Bornitrid-Agglomeraten beträgt vorzugsweise wenigstens 1 Gew.-%, weiter vorzugsweise wenigstens 5 Gew.-%, weiter vorzugsweise wenigstens 10 Gew.-%, weiter vorzugsweise wenigstens 20 Gew.-% und insbesondere bevorzugt wenigstens 30 Gew.-%, jeweils bezogen auf die Gesamtmenge der Bornitrid-Agglomerate.

Der Anteil der Nitride und Oxinitride in der Bindephase beträgt vorzugsweise wenigstens 50 Gew.-%, besonders bevorzugt wenigstens 80 Gew.-%, bezogen auf die Gesamtmenge der Bindephase.

Die Bindephase bindet die Bornitrid-Primärpartikel im Agglomerat, so dass im Vergleich zu binderfreien Agglomeraten mechanisch stabilere Agglomerate erhalten werden können.

Die nitridgebundenen isotropen Bornitrid-Agglomerate können abhängig von Herstellungsverfahren rundlich bis kugelförmig oder blockig und kantig sein. Über Sprühtrocknen hergestellte Agglomerate behalten ihre rundliche bis kugelige Form auch nach der Nitridierung. Über Kompaktierung und Zerkleinerung hergestellte Agglomerate haben eine eher blockige oder brockige, kantige bzw. eckige Form.

Bei der Herstellung der erfindungsgemäßen Polymer-Bornitrid-Compounds werden die nitridgebundenen isotropen Bornitrid-Agglomerate bevorzugt mit einem mittleren Agglomeratdurchmesser ($d_{50}$) von $\leq 1000\ \mu m$, weiter bevorzugt $\leq 500\ \mu m$, weiter bevorzugt $\leq 400\ \mu m$, weiter bevorzugt $\leq 300\ \mu m$ und weiter bevorzugt $\leq 200\ \mu m$ eingesetzt. Der mittlere Agglomeratdurchmesser ($d_{50}$) kann mittels Laserbeugung ermittelt werden (Naßmessung, Mastersizer 2000, Malvern). Der mittlere Agglomeratdurchmesser entspricht mindestens dem Zweifachen der mittleren Partikelgröße der bei der Agglomeratherstellung eingesetzten Bornitrid-Primärpartikel, bevorzugt mindestens der dreifachen Größe. Der mittlere Agglomeratdurchmesser kann auch das Zehnfache oder auch das Fünfzigfache oder mehr der mittleren Partikelgröße der bei der Agglomeratherstellung eingesetzten Bornitrid-Primärpartikel betragen. Die mittlere Partikelgröße der Primärpartikel ($d_{50}$) in den nitridgebundenen isotropen Bornitrid-Agglomeraten beträgt $\leq 50\mu m$, bevorzugt $\leq 30\mu m$, weiter bevorzugt $\leq 15\mu m$, weiter bevorzugt $\leq 10\mu m$ und insbesondere bevorzugt $\leq 6\ \mu m$.

Die bei der Compoundierung der Polymer-Bornitrid-Compounds eingesetzten nitridgebundenen isotropen Bornitrid-Agglomerate weisen ein Aspektverhältnis von 1,0 bis 1,8, vorzugsweise von 1,0 bis 1,5 auf.

Die nitridgebundenen isotropen Bornitrid-Agglomerate sind Bornitrid-Agglomerate hoher Dichte.

In den nitridgebundenen isotropen Bornitrid-Agglomeraten gibt es direkte Kontaktstellen zwischen den einzelnen plättchenförmigen Bornitrid-Primärpartikeln, so dass es in den Bornitrid-Agglomeraten durchgehende aus Bornitrid-Primärpartikeln bestehende Wärmeleitpfade gibt.

Als Bornitrid-Ausgangspulver zur Erzeugung der nitridgebundenen isotropen Bornitrid-Agglomerate können hexagonales Bornitrid, amorphes Bornitrid, teilkristallines Bornitrid, sowie Mischungen davon eingesetzt werden.

Die mittlere Partikelgröße ($d_{50}$) des eingesetzten Bornitrid-Pulvers kann 0,5 - 50 $\mu m$, vorzugsweise 0,5 - 15 $\mu m$, weiter vorzugsweise 0,5 - 5 $\mu m$ betragen. So können beispielsweise hexagonale Bornitrid-Pulver mit einer mittleren Partikelgröße von 1 $\mu m$, 3 $\mu m$, 6 $\mu m$, 9 $\mu m$ und 15 $\mu m$ eingesetzt werden, aber auch höhere mittlere Partikelgrößen bis zu 50 $\mu m$ sind möglich. Ebenso können Mischungen verschiedener hexagonaler Bornitrid-Pulver mit unterschiedlichen Partikelgrößen eingesetzt werden. Die Messung der mittleren Partikelgröße ($d_{50}$) der eingesetzten Bornitrid-Pulver erfolgt üblicherweise mittels Laserbeugung (Naßmessung, Mastersizer 2000, Malvern).

Es können $B_2O_3$-freie Bornitrid-Pulver sowie Bornitrid-Pulver mit geringeren $B_2O_3$-Gehalten von bis zu 0,5 Gew.-%, aber auch mit höheren $B_2O_3$-Gehalten von bis zu 10 Gew.-% und mehr eingesetzt werden.

Die Bindephasen-Rohstoffe können in fester oder flüssiger bzw. pastöser Form vorliegen.

Die Vermischung von Bornitrid-Ausgangspulver und Bindephasen-Rohstoffen kann beispielsweise in einer Mischtrommel, in einem V-Mischer, Röhnradmischer, einer Schwingmühle oder einem Eirichmischer erfolgen. Die Homogenität kann in einem folgenden Mahlschritt, beispielsweise in einer Schlagkreuzmühle, Trommelmühle oder Rührwerkskugelmühle, weiter erhöht werden. Die Pulvermischung kann trocken oder angefeuchtet sein. Der Zusatz von Presshilfsmitteln und ggf. Gleithilfsmitteln ist ebenfalls möglich. Die Vermischung kann auch nass erfolgen, beispielsweise wenn die anschließende Herstellung der Granulate über Sprühtrocknen oder Aufbaugranulation erfolgt.

Die Formgebung kann durch Verdichten der trockenen oder angefeuchteten Pulvermischung zu Platten oder Tabletten mittels Uniaxialpressen, über isostatisches Verpressen oder über Walzenkompaktieren erfolgen. Ebenfalls mögliche Formgebungsverfahren sind Granulationsverfahren wie Sprühgranulierung oder Aufbaugranulierung. Die Restfeuchte der hergestellten Formkörper oder Granulate kann vor der Nitridierung durch eine Temperaturbehandlung bei ca. 100 °C ausgetrieben werden.

Die trockenen Formkörper oder Granulate werden einer Hochtemperaturbehandlung in einer Nitridieratmosphäre unterzogen, bei Temperaturen von wenigstens 1600 °C, vorzugsweise von wenigstens 1800 °C. Die Nitridieratmosphäre umfasst vorzugsweise Stickstoff und/oder Ammoniak. Vorzugsweise enthält die Nitridieratmosphäre zusätzlich Argon. Nach Erreichen der Maximaltemperatur kann eine Haltezeit von bis zu mehreren Stunden oder Tagen eingelegt werden. Die Temperaturbehandlung kann in einem kontinuierlichen oder in einem Batch- Verfahren durchgeführt werden. Durch die Temperaturbehandlung in der Nitridieratmosphäre entsteht eine nitridische Bindephase, die die Bornitrid-Primärpartikel miteinander verbindet. Durch den Nitridierschritt kann der Kristallisationsgrad der Primärpartikel zunehmen, was mit einem Primärpartikelwachstum verbunden ist.

Die Granulate oder Formkörper werden vor der Hochtemperaturbehandlung vorzugsweise noch einer Temperaturbehandlung bei einer Temperatur von mindestens 700 °C in einer Nitridieratmosphäre unterzogen, wobei die Temperatur dieser ersten Temperaturbehandlung unterhalb der Temperatur der Hochtemperaturbehandlung liegt. Die Nitridieratmosphäre dieser Vornitridierung umfasst vorzugsweise Stickstoff und/oder Ammoniak. Vorzugsweise enthält die Nitridieratmosphäre zusätzlich Argon.

Der Anteil an bei der Nitridierung nicht umgesetzten Rohstoffe der Bindephase in den nitridgebundenen isotropen Bornitrid-Agglomeraten beträgt bevorzugt ≤ 10 %, weiter bevorzugt ≤ 5 %, weiter bevorzugt ≤ 3 % und besonders bevorzugt ≤ 2 %. Die Verunreinigung mit Sauerstoff beträgt bevorzugt ≤ 10 %, weiter bevorzugt ≤ 5 %, weiter bevorzugt ≤ 2% und insbesondere bevorzugt ≤ 1%.

Als Bindephasen-Rohstoffe zur Erzeugung der nitridischen Bindephase werden vorzugsweise Metallpulver eingesetzt, die über direkte Nitridierung in das entsprechende Metallnitrid oder in ein Oxinitrid oder in Mischungen von Metallnitriden und Oxinitriden umgewandelt werden. Vorzugsweise handelt es sich bei den eingesetzten Metallpulvern um Aluminium-, Silizium- oder Titanpulver oder Mischungen davon. Insbesondere bevorzugt wird Aluminiumpulver eingesetzt.

Als Bindephasen-Rohstoffe zur Erzeugung der nitridischen Bindephase können auch Metallverbindungen in Kombination mit Reduktionsmitteln eingesetzt werden, die nitridische Bindephase wird dabei über eine Reduktions-Nitridierung hergestellt. Als Metallverbindungen werden dabei vorzugsweise Verbindungen der Elemente Aluminium, Silizium und Titan eingesetzt, bevorzugt Oxide und/oder Hydroxide wie beispielsweise Aluminiumoxid ($Al_2O_3$), Aluminiumhydroxid ($Al(OH)_3$), Böhmit ($AlOOH$), Siliziumdioxid ($SiO_2$) und Titandioxid ($TiO_2$). Als Metallverbindungen können weiterhin Borate eingesetzt werden, beispielsweise Aluminiumborat. Als Reduktionsmittel können Kohlenstoff und Wasserstoff sowie organische Verbindungen wie beispielsweise Polyvinylbutyral (PVB), Melamin und Methan eingesetzt werden. Werden gasförmige Stoffe wie beispielsweise Wasserstoff oder Methan als Reduktionsmittel eingesetzt, so werden diese Stoffe der Nitridieratmosphäre zugesetzt. Das zur Reduktion notwendige Reduktionsmittel kann auch bereits in der Metallverbindung vorliegen, so dass sich der Einsatz zusätzlicher Reduktionsmittel erübrigt, beispielsweise bei Einsatz von Aluminiumisopropoxid, Tetraethylorthosilikat oder Titanisopropoxid als Bindemittel-Rohstoff. Im Nitridierschritt werden die Metallverbindungen zu den entsprechenden Metallnitriden umgesetzt. Es ist auch möglich, dass bei der Nitridierung Oxinitride bzw. Mischungen von Metallnitriden und Oxinitriden entstehen, ebenso kann die Bindephase noch Reste von nicht umgesetzten Oxiden enthalten.

Als Bindephasen-Rohstoffe zur Erzeugung der nitridischen Bindephase können auch Edukte zur Herstellung von Bornitrid eingesetzt werden. Die Edukte zur Herstellung von Bornitrid können eine oxidische Borquelle wie beispielsweise Borsäure ($H_3BO_3$) und Boroxid ($B_2O_3$) in Kombination mit einem Reduktionsmittel wie beispielsweise Kohlenstoff oder Wasserstoff oder organischen Verbindungen wie Polyvinylalkohol (PVA), Polyvinylbutyral (PVB), Melamin und Methan enthalten. Werden gasförmige Stoffe wie beispielsweise Wasserstoff oder Methan als Reduktionsmittel eingesetzt, so werden diese Stoffe der Nitridieratmosphäre zugesetzt. Weiterhin können als Edukte zur Herstellung von Bornitrid im Wesentlichen sauerstofffreie Borquellen wie beispielsweise elementares Bor, Borcarbid und Trimethylborat eingesetzt werden. Im Nitridierschritt werden diese Rohstoffe zu hexagonalem Bornitrid umgesetzt.

Als Bindephasen-Rohstoffe zur Erzeugung der nitridischen Bindephase können weiterhin nitridische Materialien eingesetzt werden, die sich bei der Temperaturbehandlung in der Nitridieratmosphäre verfestigen. Das nitridische Material kann eine Nitrid- und/oder Oxinitrid-Verbindung von Aluminium und Silizium sein, es können auch Titannitrid und die Nitride der Seltenen Erden eingesetzt werden, ebenso wie Verbindungen aus der Gruppe der Sialone. Als Sinterhilfsstoffe können Flüssigphasen eingesetzt werden wie beispielsweise Yttriumoxid, Aluminiumoxid, Magnesiumoxid, Calciumoxid, Siliziumoxid und Oxide der Seltenen Erden.

Es ist auch möglich, Mischungen der verschiedenen aufgeführten Bindephasen-Rohstoffe einzusetzen.

Die Formkörper oder Granulate werden nach der Temperaturbehandlung in der Nitridieratmosphäre, falls erforderlich, in einem anschließenden Zerkleinerungs- und/oder Fraktionierungsschritt auf die gewünschte Agglomeratgröße gebrochen bzw. fraktioniert und somit die erfindungsgemäßen nitridgebundenen Agglomerate hergestellt. Wurde bereits während der Granulierung der Rohstoffe die Endagglomeratgröße eingestellt, beispielsweise wenn die Granulierung mittels Sprühtrocknung oder Aufbaugranulierung erfolgt ist, entfällt der Zerkleinerungsschritt nach der Nitridierung.

Zur Erreichung der Zielagglomeratgröße der nitridgebundenen isotropen Bornitrid-Agglomerate können übliche Schritte wie Sieben, Siebbrechen und Sichten eingesetzt werden. Gegebenenfalls enthaltener Feinanteil kann als erstes entfernt werden. Alternativ zum Sieben kann die definierte Zerkleinerung der Agglomerate auch über Siebreiben, Sichtermühlen, strukturierte Walzenbrecher und Schneidräder erfolgen. Auch eine Mahlung beispielsweise in einer Kugelmühle ist möglich.

Die nitridgebundenen isotropen Bornitrid-Agglomerate können im Anschluss an ihre Herstellung noch weiteren Behandlungen unterzogen werden. Dabei können beispielsweise eine oder mehrere der folgenden möglichen derartigen Behandlungen durchgeführt werden:

- eine Temperaturbehandlung unter Sauerstoff, die zur oberflächlichen Oxidation der nitridgebundenen isotropen Bornitrid-Agglomerate führt. So können beispielsweise durch eine oberhalb von 500 °C durchgeführte Oxidation an Luft von Agglomeraten mit Titannitrid (TiN) enthaltender Bindephase Agglomerate mit oberflächlichem Titandioxid ($TiO_2$) hergestellt werden, bei einer Siliziumnitrid ($Si_3N_4$) enthaltenden Bindephase kann oberflächliches Siliziumdioxid ($SiO_2$) und bei einer Aluminiumnitrid (AlN) enthaltenden Bindephase kann oberflächliches Aluminiumoxid ($Al_2O_3$) erzeugt werden.

- eine Wasserdampfbehandlung

- eine Oberflächenmodifizierung mit Silanen, Titanaten oder anderen metallorgani- schen Verbindungen, entweder bei Raumtemperatur oder unter Temperatureinwirkung und mit Träger- oder Reaktionsgasen. Diese Oberflächenmodifizierung erhöht auch die Hydrolysebeständigkeit der nitridischen Bindephase.

- eine Oberflächenmodifizierung mit Polymeren, beispielsweise mit Polyethylenglykol (PEG), Polyvinylalkohol (PVA), Polyvinylbutyral (PVB), Polyvinylpyrroldion (PVP), Copolymeren, Acrylaten, Ölen oder Carbonsäuren

- eine Infiltration mit Sol-Gel-Systemen, beispielsweise mit Böhmitsol oder $SiO_2$-Sol, oder mit wasserlöslichen Gläsern oder Nanopartikeln oder oberflächenmodifizierten Nanopartikeln oder Mischungen daraus.

- eine Infiltration mit wasser- oder ethanollöslichen Polymeren. Die Bornitrid-Agglomerate können mit Harzen, wie beispielsweise Silikon-, Epoxy- oder Polyurethan-Harzen infiltriert werden und das Harz mit Härter oder temperaturhärtend vor oder während der Compoundierung aushärten.

Die aufgeführten Oberflächenbehandlungen können auch für Gemische von nitridgebundenen isotropen Bornitrid-Agglomeraten mit anderen Bornitrid-Füllstoffen wie beispielsweise Bornitrid-Primärpartikeln durchgeführt werden.

Es ist auch möglich, mehrere der aufgeführten Behandlungen in beliebiger Reihenfolge zu kombinieren. Die Behandlungen können beispielsweise im Wirbelschichtverfahren durchgeführt werden.

Durch die aufgeführten Behandlungen kann eine verbesserte Ankopplung der Polymermatrix an die nitridgebundenen isotropen Agglomerate erzielt werden.

Mit den nitridgebundenen isotropen Bornitrid-Agglomeraten kann überraschenderweise bei ansonsten vergleichbaren Verarbeitungsbedingungen die Through-plane-Wärmeleitfähigkeit bei einem Füllgrad von 30 Vol.-% um mehr als 40%-und bei einem Füllgrad von 40 Vol.-% um mehr als 70% gegenüber dem Einsatz von nicht agglomeriertem plättchenförmigem Bornitrid gesteigert werden. Besonders überraschend ist, dass diese Steigerungen auch bei schroffer Compoundierung im Doppelschneckenextruder und beim Spritzguss dünner Platten erzielt werden.

In einer weiteren bevorzugten Ausführungsform des erfindungsgemäßen Bauteils und Polymer-Bornitrid-Compounds werden als Bornitrid-Agglomerate weitgehend anisotrope schuppenförmige Bornitrid-Agglomerate eingesetzt. Bei diesen Bornitrid-Agglomeraten handelt es sich um Agglomerate umfassend plättchenförmige hexagonale Bornitrid-Primärpartikel, die miteinander zu schuppenförmig ausgebildeten Bornitrid-Agglomeraten agglomeriert sind. Diese Bornitrid-Agglomerate können auch als schuppenförmige Bornitrid-Agglomerate oder als Bornitrid-Flakes bezeichnet werden. Diese Bornitrid-Flakes sind zu unterscheiden von nicht agglomerierten plättchenförmigen Bornitrid-Primärpartikeln, die in der englischsprachigen Literatur oftmals auch als "flaky boron nitride particles" bezeichnet werden. Die schuppenförmigen Bornitrid-Agglomerate sind in ihrer Struktur aus vielen einzelnen Bornitrid-Plättchen aufgebaut. Die plättchenförmigen Bornitrid-Primärpartikel sind in diesen Agglomeraten nicht regellos zueinander orientiert. Die schuppenförmigen Bornitrid-Agglomerate umfassen plättchenförmige Bornitrid-Primärpartikel, deren Plättchenebenen parallel zueinander ausgerichtet sind. Vorzugsweise sind die plättchenförmigen Bornitrid-Primärpartikel miteinander in der Weise agglomeriert, dass die Plättchenebenen der Bornitrid-Primärpartikel im Wesentlichen parallel zueinander ausgerichtet sind. Die schuppenförmigen Bornitrid-Agglomerate haben anisotrope Eigenschaften, da die plättchenförmigen Bornitrid-Primärpartikel in diesen Agglomeraten nicht regellos zueinander orientiert sind.

Der Grad der Ausrichtung der plättchenförmigen Bornitrid-Primärpartikel in den anisotropen schuppenförmigen Bornitrid-Agglomeraten kann durch den Texturindex charakterisiert werden. Der Texturindex von hexagonalem Bornitrid (hBN) mit vollständig isotroper Ausrichtung der plättchenförmigen Bornitrid-Primärpartikel, also ohne Vorzugsorientierung, liegt bei 1. Mit dem Grad der Orientierung in der Probe, das heißt je mehr plättchenförmige Bornitrid-Primärpartikel mit ihren Basalflächen aufeinander bzw. parallel zueinander angeordnet sind, bzw. je mehr Plättchenebenen der Bornitrid-Primärpartikel parallel zueinander ausgerichtet sind, steigt der Texturindex an. Der Texturindex der für die erfindungsgemäßen Bauteile eingesetzten anisotropen schuppenförmigen Bornitrid-Agglomerate liegt vorzugsweise bei Werten von größer 2,0, vorzugsweise bei 2,5 und mehr, weiter vorzugsweise bei 3,0 und mehr, besonders bevorzugt bei 3,5 und mehr. Der Texturindex der erfindungsgemäßen Agglomerate kann auch Werte von 5,0 und mehr sowie von 10,0 und mehr aufweisen. Die Bestimmung des Texturindex erfolgt röntgenographisch. Dazu wird das Verhältnis der an Röntgenbeugungsdiagrammen gemessenen Intensitäten des (002)- und des (100)-Beugungsreflexes bestimmt und durch den entsprechenden Verhältniswert für eine ideale, nicht texturierte hBN-Probe geteilt. Dieses ideale Verhältnis kann aus den JCPDS-Daten ermittelt werden und beträgt 7,29.

Der Texturindex (TI) der Bornitrid-Agglomerate kann somit gemäß der Formel

$$TI = \frac{I_{(002),\ Probe}\ /\ I_{(100),\ Probe}}{I_{(002),\ theoretisch}\ /\ I_{(100),\ theoretisch}} = \frac{I_{(002),\ Probe}\ /\ I_{(100),\ Probe}}{7,29}$$

als Verhältnis $I_{(002)}/I_{(100)}$ der Intensitäten des (002)- und des (100)-Beugungsreflexes des Röntgenbeugungsdiagramms der Bornitrid-Agglomerate, dividiert durch die Zahl 7,29, ermittelt werden. Der Texturindex der Bornitrid-Agglomerate wird an einer Schüttung der Bornitrid-Agglomerate gemessen. Die Messung wird bei Raumtemperatur durchgeführt.

Wird der Texturindex an großen schuppenförmigen Einzel-Agglomeraten einer Größe von etwa 3,5 cm$^2$ (bezogen auf die Fläche der Ober- bzw. Unterseite der schuppenförmigen Agglomerate) ermittelt, so können für den Texturindex sehr hohe Werte von 100 und mehr und von bis zu etwa 500 erhalten werden. Diese an den großen schuppenförmigen Agglomeraten gemessenen Werte sind ein Beleg für die sehr starke Ausrichtung der Primärpartikel in den schuppenförmigen Bornitrid-Agglomeraten. Bei der Messung des Texturindex an den für die erfindungsgemäßen Bauteile und Polymer-Bornitrid-Compounds eingesetzten schuppenförmigen Bornitrid-Agglomeraten, die wie oben bereits beschrieben an einer Agglomeratschüttung durchgeführt wird, erfolgt teilweise eine statistische Ausrichtung im Probenträger für die röntgenografische Messung. Daher sind die an kleineren schuppenförmigen Agglomeraten einer Größe von ≤ 1 mm erhaltenen Werte für den Texturindex immer niedriger als es der Orientierung der Primärpartikel im einzelnen schuppenförmigen Agglomerat entspricht.

Der Texturindex der für die erfindungsgemäßen Bauteile und Bornitrid-Polymer-Compounds eingesetzten isotropen nitridgebundenen Agglomerate liegt vorzugsweise bei Werten von 1,0 bis < 2,0.

In den erfindungsgemäßen Polymer-Bornitrid-Compounds und den erfindungsgemäßen Bauteilen werden die anisotropen schuppenförmigen Bornitrid-Agglomerate vorzugsweise mit einem mittleren Agglomeratdurchmesser ($d_{50}$) von ≤ 1000 μm, weiter vorzugsweise von ≤ 500 μm, weiter vorzugsweise von ≤ 300 μm und insbesondere bevorzugt von ≤ 200 μm eingesetzt. Der mittlere Agglomeratdurchmesser ($d_{50}$) der in den erfindungsgemäßen Polymer-Bornitrid-Compounds und den erfindungsgemäßen Bauteilen eingesetzten anisotropen schuppenförmigen Bornitrid-Agglomerate beträgt vorzugsweise ≥ 20 μm, weiter vorzugsweise ≥ 30 μm, weiter vorzugsweise ≥ 50 μm und insbesondere bevorzugt ≥ 100 μm. Der mittlere Agglomeratdurchmesser ($d_{50}$) kann mittels Laserbeugung ermittelt werden (Naßmessung, Mastersizer 2000, Malvern). Der mittlere Agglomeratdurchmesser entspricht mindestens dem Zweifachen der mittleren Partikelgröße der bei der Agglomeratherstellung eingesetzten Bornitrid-Primärpartikel, bevorzugt mindestens der dreifachen Größe. Der mittlere Agglomeratdurchmesser kann auch das Zehnfache oder auch das Fünfzigfache oder mehr der mittleren Partikelgröße der bei der Agglomeratherstellung eingesetzten Bornitrid-Primärpartikel betragen. Die mittlere Partikelgröße der Primärpartikel ($d_{50}$) in den anisotropen schuppenförmigen Bornitrid-Agglomeraten beträgt ≤ 50 μm, bevorzugt ≤ 30 μm, weiter bevorzugt ≤ 15 μm, weiter bevorzugt ≤ 10 μm und insbesondere bevorzugt ≤ 6 μm.

Die Dicke der anisotropen schuppenförmigen Bornitrid-Agglomerate beträgt $\leq 500$ $\mu$m, bevorzugt $\leq 200$ $\mu$m, weiter bevorzugt $\leq 100$ $\mu$m, weiter bevorzugt $\leq 70$ $\mu$m, weiter bevorzugt $\leq 50$ $\mu$m und insbesondere bevorzugt $\leq 35$ $\mu$m. Die Dicke beträgt mindestens 1 $\mu$m, weiter bevorzugt $\geq 2$ $\mu$m, weiter bevorzugt $\geq 3$ $\mu$m und insbesondere bevorzugt $\geq 5$ $\mu$m. Die Dicke der anisotropen schuppenförmigen Bornitrid-Agglomerate kann mit einer Präzisions-Digital-Messuhr oder im Raserelektronenmikroskop (REM) ermittelt werden.

Das Aspektverhältnis, d. h. das Verhältnis des Agglomeratdurchmessers zur Agglomeratdicke der schuppenförmigen Bornitrid-Agglomerate kann anhand von rasterelektronenmikroskopischen (REM-) Aufnahmen ermittelt werden, indem Agglomeratdurchmesser und - dicke vermessen werden. Das Aspektverhältnis der erfindungsgemäßen schuppenförmigen Agglomerate liegt bei einem Wert von größer als 1, vorzugsweise bei Werten von 2 und mehr, weiter vorzugsweise bei Werten von 3 und mehr, weiter vorzugsweise bei Werten von 5 und mehr und besonders bevorzugt bei Werten von 10 und mehr.

Die anisotropen schuppenförmigen Bornitrid-Agglomerate sind Bornitrid-Agglomerate hoher Dichte.

In den anisotropen schuppenförmigen Bornitrid-Agglomeraten gibt es direkte Kontaktstellen zwischen den einzelnen plättchenförmigen Bornitrid-Primärpartikeln, so dass es in den Bornitrid-Agglomeraten durchgehende aus Bornitrid-Primärpartikeln aufgebaute Wärmeleitpfade gibt.

Die für die erfindungsgemäßen Bauteile und Bornitrid-Polymer-Compounds eingesetzten schuppenförmigen Bornitrid-Agglomerate haben auf ihrer Ober- und Unterseite durch das Formgebungsverfahren unmittelbar erzeugte, nicht durch Zerkleinern hergestellte Oberflächen. Diese Oberflächen werden im Folgenden als "Formgebungsflächen" bezeichnet. Die Formgebungsflächen sind vergleichsweise glatt im Unterschied zu den rauen seitlichen Oberflächen (Bruchflächen) der Agglomerate, die durch Brechen bzw. Zerkleinerungsschritte entstanden sind. Die Oberflächen der schuppenförmigen Bornitrid-Agglomerate sind im Wesentlichen eben

(planar) und ihre Ober- und Unterseite sind weitgehend parallel zueinander.

Der Anteil der Formgebungsfläche an der Gesamtoberfläche der schuppenförmigen Bornitrid-Agglomerate beträgt bei Annahme einer Plättchen- bzw. Schuppenform mit runder Grundfläche durchschnittlich mindestens 33 % (für den Fall, dass der Durchmesser der Agglomerate gleich ihrer Höhe ist) und bei Annahme einer Plättchen- bzw. Schuppenform mit quadratischer Grundfläche ebenfalls mindestens 33 % (für den Fall von würfelförmigen Agglomeraten). Für schuppenförmigen Bornitrid-Agglomerate mit hohem Aspektverhältnis liegt der Anteil der Formgebungsfläche an der Gesamtoberfläche deutlich höher, für Agglomerate mit einem Aspektverhältnis > 3,0 liegt der Anteil üblicherweise zwischen 60 und 95 %, für sehr große Agglomerate kann der Anteil noch höher liegen. Durch Verrunden der Agglomerate oder als Folge eines Sieb- bzw. Klassierungsprozesses kann sich der Anteil der Formgebungsfläche an der Gesamtoberfläche reduzieren, in der Regel beträgt der Anteil aber stets wenigstens 10 %, vorzugsweise wenigstens 20 %.

Das Verhältnis von Formgebungsfläche zu Gesamtoberfläche kann durch Auswertung von REM-Aufnahmen ermittelt werden. Dazu werden die zur Bestimmung des Aspektverhältnisses ermittelten Werte für Agglomeratdurchmesser und -dicke verwendet. Aus diesen Werten wird der Anteil der Formgebungsfläche an der Gesamtoberfläche wie folgt ermittelt:

$$\text{Anteil Formgebungsfläche } [\%] = ((2 * \text{Stirnfläche})/\text{Gesamtoberfläche}) * 100$$

wobei

$$\text{Stirnfläche} = \text{Agglomeratdurchmesser} * \text{Agglomeratdurchmesser}$$

$$\text{Gesamtoberfläche} = 2 * \text{Stirnfläche} + 4 * \text{Seitenfläche}$$

$$\text{Seitenfläche} = \text{Agglomeratdicke} * \text{Agglomeratdurchmesser}$$

Zur Herstellung der schuppenförmigen Bornitrid-Agglomerate wird Bornitrid-Ausgangspulver in Form von Bornitrid-Primärpartikeln oder amorphem Bornitrid, gegebenenfalls vermischt mit Bindephasen-Rohstoffen, in einem Formgebungsschritt zu schuppenförmigen Agglomeraten verarbeitet und anschließend einem thermischen Behandlungsschritt, einer Hochtemperaturglühung, unterzogen und die erhaltenen schuppenförmigen Agglomerate gegebenenfalls anschließend noch zerkleinert und/oder fraktioniert.

Die Formgebung der schuppenförmigen Bornitrid-Agglomerate erfolgt durch Verdichten der trockenen oder angefeuchteten Pulvermischung mittels Uniaxialpressen oder über Walzenkompaktieren.

Vorzugsweise wird zur Formgebung das Bornitrid-Ausgangspulver bzw. die Pulvermischung aus Bornitrid-Ausgangspulver und Bindephasen-Rohstoffen zwischen zwei sich drehenden gegenläufigen Walzen verpresst. Dabei werden Anpresskräfte im Walzenspalt von ≥ 0,5 kN, vorzugsweise von ≥ 1 kN, weiter vorzugsweise von ≥ 2 kN, weiter vorzugsweise von ≥ 3 kN, weiter vorzugsweise von ≥ 5 kN, weiter vorzugsweise von ≥ 7 kN und besonders bevorzugt von ≥ 10 kN pro cm Walzspaltlänge eingestellt. Der Anpressdruck der Walzen hat Einfluss auf die Dichte der anisotropen schuppenförmigen Bornitrid-Agglomerate. Bei hohen Anpressdrücken wird ein Teil des Bornitrid-Rohstoffs amorphisiert, der bei der anschließenden Hochtemperaturglühung rekristallisiert. Die Herstellung der anisotropen schuppenförmigen Bornitrid-Agglomerate kann auch bei Verwendung mikrostrukturierter Walzen erfolgen.

Die Restfeuchte der hergestellten Agglomerate kann vor der weiteren Temperaturbehandlung bzw. Nitridierung durch eine Trocknung bei ca. 100 °C ausgetrieben werden.

Das zu schuppenförmigen Agglomeraten kompaktierte Material wird einem thermischen Behandlungsschritt, einer Hochtemperaturglühung, unterzogen. Werden die schuppenförmigen Agglomerate ohne Zusatz von Bindephasen-Rohstoffen und nur unter Verwendung von Bornitrid-Ausgangspulvern, also von Bornitrid-Primärpartikeln oder amorphem Bornitrid, hergestellt, so erfolgt die Hochtemperaturglühung der schuppenförmigen Agglomerate bei Temperaturen von mindestens 1600 °C, vorzugsweise von mindestens 1800 °C.

Die erhaltenen schuppenförmigen Agglomerate können gegebenenfalls anschließend noch zerkleinert und/oder fraktioniert werden.

Mit steigendem Anpressdruck bei der Kompaktierung und mit steigender Temperatur bei der thermischen Behandlung steigt die Stabilität der anisotropen schuppenförmigen Bornitrid-Agglomerate an, ebenso wie die Wärmeleitfähigkeit, gemessen an dünnen Platten einer Stärke von 2 mm, die aus erfindungsgemäßen Polymer-Bornitrid-Compounds unter Verwendung der anisotropen schuppenförmigen Bornitrid-Agglomerate hergestellt wurden.

Bei der Herstellung der anisotropen schuppenförmigen Bornitrid-Agglomerate können Bornitrid-Pulver ohne weitere Zusätze eingesetzt und zu den anisotropen schuppenförmigen Bornitrid-Agglomeraten verarbeitet werden. Vorzugsweise werden Mischungen aus hexagonalem Bornitrid-Pulver und anderen Pulvern eingesetzt und somit anisotrope schuppenförmige Mischagglomerate aus Bornitrid und Sekundärphasen hergestellt ("Bornitrid-Hybrid-Flakes"). Bei den zur Herstellung der anisotropen schuppenförmigen Mischagglomerate zum hexagonalen Bornitrid-Pulver zugesetzten weiteren Pulvern handelt es sich um Bindephasen-Rohstoffe zur Erzeugung einer anorganischen Bindephase. In den anisotropen schuppenförmigen Mischagglomeraten sind die hexagonalen Bornitrid-Primärpartikel miteinander mittels einer anorganischen Bindephase als Sekundärphase verbunden.

Die anorganische Bindephase der anisotropen schuppenförmgien Bornitrid-Mischagglomerate umfasst wenigstens ein Carbid, Borid, Nitrid, Oxid, Hydroxid, Metall oder Kohlenstoff.

Die plättchenförmigen Bornitrid-Primärpartikel sind in diesen schuppenförmigen Mischagglomeraten wie in den bindephasenfreien anisotropen schuppenförmigen Bornitrid-Agglomeraten nicht regellos zueinander orientiert. Die schuppenförmigen Bornitrid-Mischagglomerate umfassen plättchenförmige Bornitrid-Primärpartikel, deren Plättchenebenen parallel zueinander ausgerichtet sind. Vorzugsweise sind die plättchenförmigen Bornitrid-Primärpartikel miteinander in der Weise agglomeriert, dass die Plättchenebenen der Bornitrid-Primärpartikel im Wesentlichen parallel zueinander ausgerichtet sind. Die schuppenförmigen Bornitrid-Mischagglomerate haben anisotrope Eigenschaften, da die plättchenförmigen Bornitrid-Primärpartikel in diesen Agglomeraten nicht regellos zueinander orientiert sind.

Die Bindephase befindet sich in den anisotropen schuppenförmigen Bornitrid-Mischagglomeraten (Bornitrid-Hybrid-Flakes) zwischen den Bornitrid-Primärpartikeln, sie kann sich auch zumindest teilweise auf der Oberfläche der Bornitrid-Hybrid-Flakes befinden oder die Oberfläche zum großen Teil bedecken. Die Bindephase bindet die Bornitrid-Primärpartikel in den Bornitrid-Hybrid-Flakes, so dass im Vergleich zu binderfreien Agglomeraten mechanisch stabilere Agglomerate erhalten werden können.

Vorzugsweise haben die anisotropen schuppenförmigen Bornitrid-Mischagglomerate einen Bindephasen-Anteil von wenigstens 1 %, weiter vorzugsweise von wenigstens 5 %, weiter vorzugsweise von wenigstens 10 %, weiter vorzugsweise von wenigstens 20 % und insbesondere vorzugsweise von wenigstens 30 %, jeweils bezogen auf die Gesamtmenge der schuppenförmigen Bornitrid-Agglomerate.

Die Hochtemperaturglühung der schuppenförmigen Bornitrid-Agglomerate mit anorganischer Bindephase wird bei Temperaturen von wenigstens 1000 °C durchgeführt.

In einer weiteren bevorzugten Ausführungsform umfasst die anorganische Bindephase der anisotropen schuppenförmigen Mischagglomerate wenigstens ein Nitrid und/oder Oxinitrid. Bei den Nitriden und Oxinitriden handelt es sich vorzugsweise um Verbindungen der Elemente Aluminium, Silizium, Titan und Bor.

Diese Bornitrid-Mischagglomerate können auch als anisotrope nitridgebundene Bornitrid-Agglomerate bzw. als anisotrope Bornitrid-Agglomerate mit nitridischer Bindephase bezeichnet werden.

Vorzugsweise handelt es sich bei den in der Bindephase enthaltenen Nitriden und Oxinitriden um Aluminiumnitrid (AlN), Aluminiumoxinitrid, Titannitrid (TiN), Siliziumnitrid ($Si_3N_4$) und/oder Bornitrid (BN), vorzugsweise um Aluminiumnitrid, Aluminiumoxinitrid, Titannitrid und/oder Siliziumnitrid, weiter vorzugsweise um Aluminiumnitrid und/oder Aluminiumoxinitrid. Besonders bevorzugt enthält die Bindephase Aluminiumnitrid.

Die Nitride und Oxinitride der Bindephase können amorph, teilkristallin oder kristallin sein. Vorzugsweise ist die Bindephase kristallin, da damit höhere Wärmeleitfähigkeitswerte in den erfindungsgemäßen Polymer-Bornitrid-Compounds und den erfindungsgemäßen Bauteilen erzielt werden können.

Die Nitride und/oder Oxinitride enthaltende Bindephase kann zusätzlich auch oxidische Phasen enthalten, wie beispielsweise Boroxid ($B_2O_3$), Aluminiumoxid ($Al_2O_3$), Siliziumdioxid ($SiO_2$), Titandioxid ($TiO_2$), Yttriumoxid ($Y_2O_3$), Magnesiumoxid (MgO), Calciumoxid (CaO) und Seltenerdmetalloxide.

Weiterhin kann die Bindephase zusätzlich noch Borate enthalten, beispielsweise Aluminiumborate oder Calciumborate. Außerdem kann die Bindephase noch Verunreinigungen enthalten, beispielsweise Kohlenstoff, metallische Verunreinigungen, elementares Bor, Boride, Borcarbid oder andere Carbide wie beispielsweise Siliziumcarbid.

Der Anteil der Nitride und Oxinitride in der Bindephase beträgt vorzugsweise wenigstens 50 Gew.-%, besonders bevorzugt wenigstens 80 Gew.-%, bezogen auf die Gesamtmenge der Bindephase.

Vorzugsweise enthält die Bindephase Aluminiumnitrid, Siliziumnitrid oder Titannitrid oder Mischungen daraus in einem Anteil von $\geq$ 50 Gew.-% bezogen auf die Gesamtmenge der Bindephase. Insbesondere bevorzugt enthält die Bindephase Aluminiumnitrid, vorzugsweise in einem Anteil von $\geq$ 90 Gew.-% bezogen auf die Gesamtmenge der Bindephase.

Als Bindephasen-Rohstoffe zur Erzeugung der nitridischen Bindephase der anisotropen nitridgebundenen Bornitrid-Agglomerate werden vorzugsweise Metallpulver eingesetzt, die über direkte Nitridierung in das entsprechende Metallnitrid oder in ein Oxinitrid oder in Mischungen von Metallnitriden und Oxinitriden umgewandelt werden. Vorzugsweise handelt es sich bei den eingesetzten Metallpulvern um Aluminium-, Silizium- oder Titanpulver oder Mischungen davon. Insbesondere bevorzugt wird Aluminiumpulver eingesetzt. Im Nitridierschritt wird das Metall zum entsprechenden Metallnitrid umgesetzt. Es ist auch möglich, dass bei der Nitridierung Oxinitride bzw. Mischungen von Metallnitriden und Oxinitriden entstehen.

Als Bindephasen-Rohstoffe zur Erzeugung der nitridischen Bindephase der anisotropen nitridgebundenen Bornitrid-Agglomerate können auch Metallverbindungen in Kombination mit Reduktionsmitteln eingesetzt werden, die nitridische Bindephase wird dabei über eine Reduktions-Nitridierung hergestellt. Als Metallverbindungen werden dabei vorzugsweise Verbindungen der Elemente Aluminium, Silizium und Titan eingesetzt, bevorzugt Oxide und/oder Hydroxide wie beispielsweise Aluminiumoxid ($Al_2O_3$), Aluminiumhydroxid ($Al(OH)_3$), Böhmit (AlOOH), Siliziumdioxid ($SiO_2$) und Titandioxid ($TiO_2$). Als Metallverbindungen können weiterhin Borate eingesetzt werden, beispielsweise Aluminiumborat. Als Reduktionsmittel können Kohlenstoff und Wasserstoff sowie organische Verbindungen wie beispielsweise Polyvinylbutyral (PVB), Melamin und Methan eingesetzt werden. Werden gasförmige Stoffe wie beispielsweise Wasserstoff oder Methan als Reduktionsmittel eingesetzt, so werden diese Stoffe der Nitridieratmosphäre zugesetzt. Das zur Reduktion notwendige Reduktionsmittel kann auch bereits in der Metallverbindung vorliegen, so dass sich der Einsatz zusätzlicher Reduktionsmittel erübrigt, beispielsweise bei Einsatz von Aluminiumisopropoxid, Tetraethylorthosilikat oder Titanisopropoxid als Bindemittel-Rohstoff. Im Nitridierschritt werden die Metallverbindungen zu den entsprechenden Metallnitriden umgesetzt. Es ist auch möglich, dass bei der Nitridierung Oxinitride bzw. Mischungen von Metallnitriden und Oxinitriden entstehen, ebenso kann die Bindephase noch Reste von nicht umgesetzten Oxiden enthalten.

Als Bindephasen-Rohstoffe zur Erzeugung der nitridischen Bindephase der anisotropen nitridgebundenen Bornitrid-Agglomerate können auch Edukte zur Herstellung von Bornitrid eingesetzt werden. Die Edukte zur Herstellung von Bornitrid können eine oxidische Borquelle wie beispielsweise Borsäure ($H_3BO_3$) und Boroxid ($B_2O_3$) in Kombination mit einem Reduktionsmittel wie beispielsweise Kohlenstoff oder Wasserstoff oder organischen Verbindungen wie Polyvinylalkohol (PVA), Polyvinylbutyral (PVB), Melamin und Methan enthalten. Werden gasförmige Stoffe wie beispielsweise Wasserstoff oder Methan als Reduktionsmittel eingesetzt, so werden diese Stoffe der Nitridieratmosphäre zugesetzt. Weiterhin können als Edukte zur Herstellung von Bornitrid im Wesentlichen sauerstofffreie Borquellen wie beispielsweise elementares Bor, Borcarbid und Trimethylborat eingesetzt werden. Im Nitridierschritt werden diese Rohstoffe zu hexagonalem Bornitrid umgesetzt.

Als Bindephasen-Rohstoffe zur Erzeugung der nitridischen Bindephase der anisotropen nitridgebundenen Bornitrid-Agglomerate können weiterhin nitridische Materialien eingesetzt werden, die sich bei der Temperaturbehandlung in der Nitridieratmosphäre verfestigen. Das nitridische Material kann eine Nitrid- und/oder Oxinitrid-Verbindung von Aluminium und Silizium sein, es können auch Titannitrid und die Nitride der Seltenen Erden eingesetzt werden, ebenso wie Verbindungen aus der Gruppe der Sialone. Als Sinterhilfsstoffe können Flüssigphasen eingesetzt werden wie beispielsweise Yttriumoxid, Aluminiumoxid, Magnesiumoxid, Calciumoxid, Siliziumoxid und Oxide der Seltenen Erden.

Es ist auch möglich, Mischungen der verschiedenen aufgeführten Bindephasen-Rohstoffe einzusetzen.

Als Bornitrid-Ausgangspulver zur Erzeugung der anisotropen schuppenförmigen Bornitrid-Agglomerate können hexagonales Bornitrid, amorphes Bornitrid, teilkristallines Bornitrid, sowie Mischungen davon eingesetzt werden.

Die mittlere Partikelgröße $d_{50}$ des eingesetzten Bornitrid-Pulvers kann 0,5 - 50 $\mu$m, vorzugsweise 0,5 - 15 $\mu$m, weiter vorzugsweise 0,5 - 5 $\mu$m betragen. So können beispielsweise hexagonale Bornitrid-Pulver mit einer mittleren Partikelgröße von 1 $\mu$m, 3 $\mu$m, 6 $\mu$m, 9 $\mu$m und 15 $\mu$m eingesetzt werden, aber auch höhere mittlere Partikelgrößen bis zu 50 $\mu$m sind möglich. Ebenso können Mischungen verschiedener hexagonaler Bornitrid-Pulver mit unterschiedlichen Partikelgrößen eingesetzt werden. Die Messung der mittleren Partikelgröße ($d_{50}$) der eingesetzten Bornitrid-Pulver erfolgt üblicherweise mittels Laserbeugung (Naßmessung, Mastersizer 2000, Malvern).

Es können $B_2O_3$-freie Bornitrid-Pulver sowie Bornitrid-Pulver mit geringeren $B_2O_3$-Gehalten von bis zu 0,5 Gew.-%, aber auch mit höheren $B_2O_3$-Gehalten von bis zu 10 Gew.-% und mehr eingesetzt werden. Es ist auch möglich, Mischungen aus pulverförmigem oder granuliertem Bornitrid einzusetzen. Die Bindephasen-Rohstoffe können in fester oder flüssiger bzw. pastöser Form vorliegen.

Die Vermischung von Bornitrid-Ausgangspulver und Bindephasen-Rohstoffen kann beispielsweise in einer Mischtrommel, in einem V-Mischer, Röhnradmischer, einer Schwingmühle oder einem Eirichmischer erfolgen. Die Homogenität kann in einem folgenden Mahlschritt (z.B. Schlagkreuzmühle, Trommelmühle, Rührwerkskugelmühle) weiter erhöht werden. Die Pulvermischung kann trocken oder angefeuchtet sein. Der Zusatz von Presshilfsmitteln und ggf. Gleithilfsmitteln ist ebenfalls möglich. Die Vermischung kann auch nass erfolgen, beispielsweise wenn die anschließende Herstellung der Granulate über Sprühtrocknen oder Aufbaugranulation erfolgt.

Das zu schuppenförmigen Agglomeraten kompaktierte Material wird anschließend einer Hochtemperaturglühung in einer Nitridieratmosphäre unterzogen, bei Temperaturen von mindestens 1600°C, vorzugsweise von mindestens 1800°C. Die Nitridieratmosphäre umfasst vorzugsweise Stickstoff und/oder Ammoniak. Vorzugsweise enthält die Nitridieratmosphäre zusätzlich Argon. Nach Erreichen der Maximaltemperatur kann eine Haltezeit von bis zu mehreren Stunden oder Tagen eingelegt werden. Die Temperaturbehandlung kann in einem kontinuierlichen oder in einem Batch-Verfahren durchgeführt werden.

Durch die Temperaturbehandlung in der Nitridieratmosphäre entsteht eine nitridische Bindephase als Sekundärphase, die die Bornitrid-Primärpartikel miteinander verbindet. Durch den Nitridierschritt kann der Kristallisationsgrad der Primärpartikel zunehmen, was mit einem Primärpartikelwachstum verbunden ist.

Der Rest an bei der Nitridierung nicht umgesetzten Rohstoffen in der Bindephase in den anisotropen nitridgebundenen Bornitrid-Mischagglomeraten beträgt bevorzugt $\leq$ 10 %, weiter bevorzugt $\leq$ 5 %, weiter bevorzugt $\leq$ 3 % und besonders bevorzugt $\leq$ 2 %. Die Verunreinigung mit Sauerstoff beträgt bevorzugt $\leq$ 10%, weiter bevorzugt $\leq$ 5 %, weiter bevorzugt $\leq$ 2 % und besonders bevorzugt $\leq$ 1%.

Das zu schuppenförmigen Agglomeraten kompaktierte Material wird vor der Hochtemperaturbehandlung vorzugsweise noch einer Temperaturbehandlung bei einer Temperatur von mindestens 700 °C in einer Nitridieratmosphäre unterzogen, wobei die Temperatur dieser ersten Temperaturbehandlung unterhalb der Temperatur der Hochtemperaturbehandlung liegt. Die Nitridieratmosphäre dieser Vornitridierung umfasst vorzugsweise Stickstoff und/oder Ammoniak. Vorzugsweise enthält die Nitridieratmosphäre zusätzlich Argon.

Mit steigender Temperatur und Dauer bei der Temperaturbehandlung nimmt der Kristallisationsgrad der in den schuppenförmigen Bornitrid-Mischagglomeraten enthaltenen Bornitrid-Primärpartikel zu, und der Sauerstoffgehalt und die spezifische Oberfläche der enthaltenen Bornitrid-Primärpartikel nehmen ab.

Zur Erreichung der Zielagglomeratgröße der schuppenförmigen Bornitrid-Agglomerate können übliche Schritte wie Sieben, Siebbrechen und Sichten eingesetzt werden. Gegebenenfalls enthaltener Feinanteil kann als erstes entfernt werden. Alternativ zum Sieben kann die definierte Zerkleinerung der Agglomerate auch über Siebreiben, Sichtermühlen, strukturierte Walzenbrecher und Schneidräder erfolgen. Auch eine Mahlung beispielsweise in einer Kugelmühle ist möglich. Die mehrere Millimeter bis mehrere Zentimeter großen Agglomerate werden in einem weiteren Prozessschritt auf definierte Agglomeratgrößen verarbeitet. Hierzu können beispielsweise handelsübliche Siebe unterschiedlicher Siebweite und Siebhilfen auf einem Rüttelsieb verwendet werden. Ein mehrstufiger Sieb-/Siebzerkleinerungsprozess hat sich als vorteilhaft erwiesen.

Die anisotropen schuppenförmigen Bornitrid-Agglomerate können im Anschluss an ihre Herstellung noch weiteren Behandlungen unterzogen werden. Dabei können beispielsweise eine oder mehrere der folgenden möglichen derartigen Behandlungen durchgeführt werden:

- eine Wasserdampfbehandlung

- eine Oberflächenmodifizierung mit Silanen, Titanaten oder anderen metallorgani- schen Verbindungen, entweder bei Raumtemperatur oder unter Temperatureinwirkung und mit Träger- oder Reaktionsgasen. Diese Oberflächenmodifizierung erhöht im Fall der nitridgebundenen schuppenförmigen Agglomerate auch die Hydrolysebeständigkeit der nitridischen Bindephase.

- eine Oberflächenmodifizierung mit Polymeren, beispielsweise mit Polyethylenglykol (PEG), Polyvinylalkohol (PVA), Polyvinylbutyral (PVB), Polyvinylpyrroldion (PVP), Copolymeren, Acrylaten, Ölen oder Carbonsäuren

- eine Infiltration mit Sol-Gel-Systemen, beispielsweise mit Böhmitsol oder $SiO_2$-Sol, oder mit wasserlöslichen Gläsern oder Nanopartikeln oder oberflächenmodifizierten Nanopartikeln oder Mischungen daraus.

- eine Infiltration mit wasser- oder ethanollöslichen Polymeren. Die Bornitrid-Agglomerate können mit Harzen, wie beispielsweise Silikon-, Epoxy- oder Polyurethan-Harzen infiltriert werden und das Harz mit Härter oder temperaturhärtend vor oder während der Compoundierung aushärten.

- im Fall der nitridgebundenen schuppenförmigen Agglomerate eine Temperaturbehandlung unter Sauerstoff, die zur oberflächlichen Oxidation der anisotropen nitridgebundenen Bornitrid-Agglomerate führt. So können beispielsweise durch eine oberhalb von 500 °C durchgeführte Oxidation an Luft von Agglomeraten mit Titannitrid (TiN) enthaltender Bindephase Agglomerate mit oberflächlichem Titandioxid (TiO$_2$) hergestellt werden, bei einer Siliziumnitrid (Si$_3$N$_4$) enthaltenden Bindephase kann oberflächliches Siliziumdioxid (SiO$_2$) und bei einer Aluminiumnitrid (AlN) enthaltenden Bindephase kann oberflächliches Aluminiumoxid (Al$_2$O$_3$) erzeugt werden. Für anisotrope nitridgebundene Bornitrid-Agglomerate enthaltend AlN als Bindephase kann eine Temperaturbehandlung an Luft durchgeführt werden, bevorzugt bei Temperaturen von 500 °C und höher, weiter bevorzugt bei Temperaturen zwischen 700 °C und 1200°C und insbesondere bevorzugt bei Temperaturen zwischen 700 °C und 1000 °C.

Die aufgeführten Oberflächenbehandlungen können auch für Gemische von anisotropen nitridgebundenen Bornitrid-Agglomeraten mit anderen Bornitrid-Füllstoffen wie beispielsweise Bornitrid-Primärpartikeln durchgeführt werden.

Es ist auch möglich, mehrere der aufgeführten Behandlungen in beliebiger Reihenfolge zu kombinieren. Die Behandlungen können beispielsweise im Wirbelschichtverfahren durchgeführt werden.

Durch die aufgeführten Behandlungen kann in den erfindungsgemäßen Polymer-Bornitrid-Compounds eine verbesserte Ankopplung der Polymermatrix an die schuppenförmigen Bornitrid-Agglomerate erzielt werden.

Die anisotropen nitridgebundenen Bornitrid-Agglomerate weisen eine ausgezeichnete mechanische Stabilität auf. Die mechanische Stabilität der Bornitrid-Agglomerate ist von Bedeutung, da sie das Abfüllen, den Transport, die Dosierung, die Compoundierung, also die Weiterverarbeitung der Bornitrid-Agglomerate zu Polymer-Bornitrid-Compounds und die anschließende Formgebung über Spritzguß möglichst mit nur geringem Zerfall überstehen müssen. Falls die Bornitrid-Agglomerate beim Compoundieren zerfallen, besteht die Gefahr, dass sich die rheologischen Eigenschaften der Polymer-Bornitrid-Compounds verschlechtern und die Wärmeleitfähigkeit in den aus den Compounds hergestellten Bauteilen insbesondere bei spritzgegossenen dünnen Platten in through-plane-Richtung abnimmt. Dabei besteht die Gefahr, dass die Bornitrid-Agglomerate so weit degradieren, dass die Wärmeleitfähigkeit in through-plane-Richtung so weit sinkt, dass sie auf ein zu unter Verwendung von Bornitrid-Primärpartikeln hergestellten Polymercompounds vergleichbares Niveau abfällt.

Mit den anisotropen schuppenförmigen Bornitrid-Agglomeraten und mit den anisotropen nitridgebundenen Bornitrid-Agglomeraten ist die Wärmeleitfähigkeit in den erfindungsgemäßen Bornitrid-Polymer-Compounds nicht so stark richtungsabhängig wie in unter Verwendung von plättchenförmigen Bornitrid-Primärpartikeln hergestellten Bornitrid-Polymer-Compounds. Die Through-plane-Wärmeleitfähigkeit der mit den anisotropen schuppenförmigen Bornitrid-Agglomeraten und den isotropen nitridgebundenen Bornitrid-Agglomeraten hergestellten erfindungsgemäßen Bornitrid-Polymer-Compounds ist in etwa auf gleichem Niveau, während die In-plane-Wärmeleitfähigkeit der mit den anisotropen schuppenförmigen Bornitrid-Agglomeraten und den anisotropen nitridgebundenen Bornitrid-Agglomeraten hergestellten erfindungsgemäßen Polymer-Bornitrid-Compounds signifikant höher ist als die bei Verwendung der isotropen nitridgebundenen Bornitrid-Agglomerate mit identischer chemischer Zusammensetzung hergestellten erfindungsgemäßen Polymer-Bornitrid-Compounds. Die anisotropen schuppenförmigen Bornitrid-Agglomerate und die anisotropen nitridgebundenen Bornitrid-Agglomerate haben eine so hohe Festigkeit, dass sie den Compoundierprozess mit einer Polymerschmelze in hoher Anzahl und Größe überstehen.

Mit den anisotropen nitridgebundenen Bornitrid-Agglomeraten kann in den erfindungsgemäßen Polymer-Bornitrid-Compounds überraschenderweise bei ansonsten vergleichbaren Verarbeitungsbedingungen die Through-plane-Wärmeleitfähigkeit bei einem Füllgrad von 30 Vol.-% um 50 % und mehr und bei einem Füllgrad von 40 Vol.-% um etwa das Doppelte gegenüber dem Einsatz von nicht agglomeriertem plättchenförmigem Bornitrid gesteigert werden. Besonders überraschend ist, dass diese Steigerungen auch bei schroffer Compoundierung im Doppelschneckenextruder und beim Spritzguß dünner Platten erzielt wurden.

Die isotropen nitridgebundenen Bornitrid-Agglomerate, anisotropen schuppenförmigen Bornitrid-Agglomerate und die schuppenförmigen Bornitrid-Agglomerate mit anorganischer Bindephase sind stabil genug für die Anwendung in der Compoundierung und im Spritzguss von dünnen Platten einer Wandstärke von etwa 2 mm. Bei weiterer Reduzierung der Wandstärke von dünnen Platten, bei denen eine noch höhere Stabilität der Agglomerate erforderlich ist, kann durch die Erhöhung des Anteils an Bindephase in den isotropen nitridgebundenen Bornitrid-Agglomeraten und den schuppenförmigen Bornitrid-Agglomeraten mit anorganischer Bindephase eine Anpassung an die jeweiligen Stabilitätsanforderungen erfolgen.

Auch von Vorteil ist, dass durch die Einstellbarkeit bzw. die Erhöhung der Stabilität der isotropen nitridgebundenen Bornitrid-Agglomerate und der schuppenförmigen Bornitrid-Agglomerate mit anorganischer Bindephase auch Mischungen mit abrasiven Sekundärfüllstoffen möglich sind. In Mischungen von Bornitrid-Agglomeraten mit abrasiven Sekundärfüllstoffen werden herkömmliche Bornitrid-Agglomerate degradiert. Bei den erfindungsgemäß eingesetzten Bornitrid-Agglomeraten ist die Degradation soweit reduziert, dass die vorteilhaften Wärmeleitungseigenschaften, wie etwa das Anisotropieverhältnis, erhalten werden können.

Weiterhin ist von Vorteil, dass insbesondere bei hohen Füllstoffgehalten, bei denen die Schmelzviskosität in einer thermoplastischen Verarbeitung hoch ist und damit eine hohe Scherung des Füllstoffs stattfindet, die Stabilität der isotropen nitridgebundenen Bornitrid-Agglomerate und der schuppenförmigen Bornitrid-Agglomerate mit anorganischer Bindephase durch Erhöhung des Bindephasenanteils angepasst werden kann und damit eine Verarbeitung von hohen Füllstoffgehalten oder hohen Gehalten an Füllstoffgemischen ermöglicht wird.

Durch die Einstellbarkeit der Stabilität der isotropen nitridgebundenen Bornitrid-Agglomerate, der anisotropen schuppenförmigen Bornitrid-Agglomerate und der schuppenförmigen Bornitrid-Agglomerate mit anorganischer Bindephase kann ein guter Kompromiss zwischen der Abrasivität des wärmeleitfähigen Füllstoffs und einer ausreichenden Stabilität für die jeweilige Anwendung erreicht werden.

Das erfindungsgemäße Bauteil und Polymer-Bornitrid-Compound kann in einer weiteren bevorzugten Ausführungsform neben den Bornitrid-Agglomeraten als wärmeleitendem Füllstoff auch zusätzlich noch wenigstens einen von Bornitrid verschiedenen, die Wärmeleitfähigkeit erhöhenden Füllstoff enthalten. Diese zusätzlichen Füllstoffe werden wie weiter oben schon aufgeführt im Folgenden auch als Sekundärfüllstoffe bezeichnet.

Die Wärmeleitfähigkeit solcher Sekundärfüllstoffe beträgt üblicherweise ≥ 5 W/m*K, vorzugsweise ≥ 8 W/m*K.

Der Gesamtanteil an Bornitrid-Agglomeraten und den Sekundärfüllstoffen im erfindungsgemäßen Bauteil und Polymer-Bornitrid-Compound beträgt vorzugsweise wenigstens 20 Vol.-%, weiter vorzugsweise wenigstens 30 Vol.-%, jeweils bezogen auf das Gesamtvolumen des Polymer-Bornitrid-Compounds. Vorzugsweise liegt der Gesamtanteil an Bornitrid-Agglomeraten und Sekundärfüllstoffen im erfindungsgemäßen Bauteil und Polymer-Bornitrid-Compound bei höchstens 70 Vol.-%, weiter vorzugsweise bei höchstens 60 Vol.-%, jeweils bezogen auf das Gesamtvolumen des Polymer-Bornitrid-Compounds. Besonders bevorzugt beträgt der Gesamtanteil an Bornitrid-Agglomeraten und Sekundärfüllstoffen im erfindungsgemäßen Bauteil und Polymer-Bornitrid-Compound höchstens 50 Vol.-%, jeweils bezogen auf das Gesamtvolumen des Polymer-Bornitrid-Compounds.

Als Sekundärfüllstoffe können Metallpulver, vorzugsweise gewählt aus der Gruppe umfassend Aluminium-, Silizium-, Titan-, Kupfer-, Eisen- und Bronzepulver und Mischungen davon, eingesetzt werden.

Es kann auch Kohlenstoff in Form von Graphit, expandiertem Graphit oder Ruß als Sekundärfüllstoff eingesetzt werden, wobei expandierter Graphit besonders bevorzugt ist.

Weiterhin können auch keramische Füllstoffe wie Oxide, Nitride und Carbide als Sekundärfüllstoffe eingesetzt werden, vorzugsweise ausgewählt aus der Gruppe umfassend Aluminiumoxid, Magnesiumoxid, Aluminiumnitrid, Siliziumdioxid, Siliziumcarbid, Siliziumnitrid und Mischungen davon, besonders bevorzugt Aluminiumoxid, Magnesiumoxid und/oder Aluminiumnitrid.

Als Sekundärfüllstoffe können auch mineralische Füllstoffe eingesetzt werden, vorzugsweise ausgewählt aus der Gruppe umfassend Alumosilikate, Aluminiumsilikate, Magnesiumsilikat (2MgO*SiO$_2$), Magnesiumaluminat (MgO*Al$_2$O$_3$), Brucit (Magnesiumhydroxid, Mg(OH)$_2$), Quarz, Cristobalit und Mischungen davon. Als Alumosilikate bzw. Aluminiumsilikate können beispielsweise Kyanit (Al$_2$SiO$_5$) und/oder Mullit (3Al$_2$O$_3$*2SiO$_2$) eingesetzt werden.

Auch Kombinationen von Sekundärfüllstoffen sind möglich. Eine Kombination von anisotropen nitridgebundenen Bornitrid-Agglomeraten, Alumosilikat und expandiertem Graphit als wärmeleitende Füllstoffe hat sich im erfindungsgemäßen Bauteil und Polymer-Bornitrid-Compound als besonders vorteilhaft erwiesen. Ebenfalls als besonders vorteilhaft erwiesen hat sich eine Kombination aus anisotropen nitridgebundenen Bornitrid-Agglomeraten, Alumosilikat und Magnesiumoxid als wärmeleitende Füllstoffe.

Die Sekundärfüllstoffe liegen bevorzugt partikelförmig vor. Die Sekundärfüllstoff-Partikel können in ihrer Form unregelmäßig, brockig oder sphärisch oder plättchenförmig vorliegen. Der Anteil an unregelmäßig, brockig oder sphärischen Sekundärfüllstoffen im erfindungsgemäßen Bauteil und Polymer-Bornitrid-Compound beträgt vorzugsweise nicht mehr als 40 Vol.-%, weiter bevorzugt nicht mehr als 30 Vol.-% und besonders bevorzugt nicht mehr als 20 Vol.-%. Der Anteil an plättchenförmigen Sekundärfüllstoffen im erfindungsgemäßen Bauteil und Polymer-Bornitrid-Compound beträgt vorzugsweise nicht mehr als 10 Vol.-%, weiter vorzugsweise nicht mehr als 5 Vol.-%.

Die Sekundärfüllstoffe haben bevorzugt einen Partikeldurchmesser oder Plättchendurchmesser von ≥ 0,5 μm, weiter bevorzugt von ≥ 1 μm, weiter bevorzugt von ≥ 2 μm und besonders bevorzugt von ≥ 5 μm.

Der Sekundärfüllstoff liegt als Pulver vor, bevorzugt als agglomeriertes Pulver. Die Agglomerierung des Sekundärfüllstoffs kann über Walzenkompaktierung oder über Aufbaugranulierung beispielsweise im Eirichmischer erfolgen. Als Granulierungsmittel kann dabei eine PVA-Lösung verwendet werden. Vorzugsweise wird das Sekundärfüllstoffgranulat vor der Dosierung bei der Compoundierung im Extruder mit den Bornitrid-Agglomeraten abgemischt. Vor der Abmischung des Sekundärfüllstoffgranulats mit den Bornitrid-Agglomeraten wird das Sekundärfüllstoffgranulat getrocknet. Die Granulation des Sekundärfüllstoffs unterstützt die gleichmäßige Dosierung bei der Compoundierung.

Vorzugsweise werden bei Verwendung von Füllstoffkombinationen von Bornitrid-Agglomeraten und Sekundärfüllstoffen die isotropen nitridgebundenen Bornitrid-Agglomerate und/oder die anisotropen schuppenförmigen Bornitrid-Agglomerate in Kombination mit Sekundärfüllstoffen eingesetzt. Der Einsatz eines Füllstoffgemischs aus den anisotropen schuppenförmigen Bornitrid-Agglomeraten und Sekundärfüllstoffen ist dabei bevorzugt.

Die Wärmeleitfähigkeit der erfindungsgemäßen Bauteile und Polymer-Bornitrid-Compounds mit Füllstoffkombinationen von Bornitrid-Agglomeraten und Sekundärfüllstoffen ist höher als die von allein unter Verwendung der Sekundärfüllstoffe hergestellten Polymer-Compounds, jeweils bei gleichem Gesamt-Volumenanteil an Füllstoffen.

Bei der Kombination von Bornitrid-Agglomeraten, insbesondere der vorzugsweise eingesetzten anisotropen schuppenförmigen Bornitrid-Agglomerate, mit den Sekundärfüllstoffen zeigt sich überraschenderweise, dass die erzielten Wärmeleitfähigkeitswerte der mit den Füllstoffkombinationen hergestellten erfindungsgemäßen Polymer-Bornitrid-Compounds höher sind als zu erwarten gewesen wäre, wenn man die Wärmeleitfähigkeitswerte für die mit den entsprechenden Anteilen der Bornitrid-Agglomerate und Sekundärfüllstoffe jeweils einzeln gefüllten Polymerwerkstoffe, jeweils abzüglich der Wärmeleitfähigkeit des ungefüllten Basispolymers, addiert. Dies trifft sowohl für die In-plane- als auch für die Through-plane-Wärmeleitfähigkeit zu.

Das erfindungsgemäße Bauteil ist hergestellt aus einem Polymer-Bornitrid-Compound, das neben dem zumindest einen, Bornitrid-Agglomerate umfassenden wärmeleitenden Füllstoff, zumindest einen Verstärkungsfüllstoff umfasst. Ein Verstärkungsfüllstoff als zusätzlicher Füllstoff führt zu einer Verbesserung der mechanischen Eigenschaften. Die einzelnen Partikel des Verstärkungsfüllstoffes liegen bevorzugt nadelförmig und/oder faserförmig mit einem Aspektverhältnis $\geq 5$ und besonders bevorzugt $\geq 10$ vor. Als Verstärkungsfüllstoffe können Glasfasern, Kohlefasern, Aramidfasern, Wollastonit und Alumosilikat eingesetzt werden, besonders bevorzugt Glasfasern. Das Wollastonit und das Alumosilikat können dabei faserförmig und/oder nadelförmig vorliegen.

Beispielsweise können als Verstärkungsfüllstoff geschnittene Glasfasern mit einem Faserdurchmesser im Bereich von 10 - 14 $\mu$m und einer Länge von 3 bis 6 mm eingesetzt werden. In Kombination mit einem Thermoplast als Polymerwerkstoff sind dabei Faserlängen von 4,5 mm besonders bevorzugt. Ein weiteres Beispiel für den Verstärkungsfüllstoff sind gemahlene Kurzglasfasern mit einem Durchmesser von 14 $\mu$m und einer Länge im Bereich von 50 - 210 $\mu$m.

Die Verstärkungsstoffe werden bevorzugt über eine Seitendosierung zu einem möglichst späten Zeitpunkt der Schmelze zugegeben, so dass eine Homogenisierung in der Schmelze ohne Bruch der Verstärkungsstoffe erfolgt.

Auch Kombinationen von Verstärkungsfüllstoffen sind möglich. Beispielsweise hat sich eine Kombination von anisotropen nitridgebundenen Bornitrid-Agglomeraten, Alumosilikat und Glasfasern im Polymer-Bornitrid-Compound als besonders vorteilhaft erwiesen.

In einer besonders bevorzugten Ausführungsform ist das erfindungsgemäße Bauteil hergestellt aus einem Polymer-Bornitrid-Compound, das neben dem zumindest einen, Bornitrid-Agglomerate umfassenden wärmeleitenden Füllstoff und dem zumindest einen Verstärkungsfüllstoff auch zumindest einen Sekundärfüllstoff umfasst.

Hier hat sich beispielsweise eine Kombination von anisotropen nitridgebundenen Bornitrid-Agglomeraten, Magnesiumoxid und Glasfasern im Polymer-Bornitrid-Compound als besonders vorteilhaft erwiesen.

Eine weitere bevorzugte Ausführungsform des Polymer-Bornitrid-Compounds beinhaltet $\geq 10$ Vol.-% Bornitrid-Agglomerate, besonders bevorzugt $\geq 20$ Vol.-%, und $\geq 10$ Vol.-% Verstärkungsstoffe, besonders bevorzugt $\geq 15$ Vol.-%, insbesondere Glasfasern.

Der Anteil an Verstärkungsfüllstoffen im erfindungsgemäßen Polymer-Bornitrid-Compound beträgt vorzugsweise $\leq 30$ Vol.-%, weiter bevorzugt $\leq 20$ Vol.-% und besonders bevorzugt $\leq 15$ Vol.-%.

Bei der Kombination von Bornitrid-Agglomeraten, insbesondere der vorzugsweise eingesetzten anisotropen schuppenförmigen Bornitrid-Agglomerate, mit oder ohne Sekundärfüllstoffen und mit den Verstärkungsfüllstoffen zeigt sich überraschenderweise, dass sowohl die erzielten Through-plane-Wärmeleitfähigkeite als auch mechanischen Eigenschaften der mit den Füllstoffkombinationen hergestellten erfindungsgemäßen Polymer-Bornitrid-Compounds höher sind als zu erwarten gewesen wäre, wenn man Bornitrid-Primärpartikel und Glasfasern kombiniert.

Weiterhin bietet die Erfindung den Vorteil, dass eine Steigerung sowohl der Through-plane-Wärmeleitfähigkeit als auch der mechanischen Eigenschaften mit einer Senkung der Werkstoffkosten einhergeht, da ein geringerer Füllstoffgehalt an wärmeleitfähigen Füllstoffen eingesetzt werden kann.

Die erfindungsgemäßen Bauteile und Polymer-Bornitrid-Compounds können neben den Bornitrid-Agglomeraten zusätzlich noch Bornitrid-Primärpartikel enthalten. Bei den unter Verwendung von Füllstoffkombinationen von Bornitrid-Agglomeraten und Sekundärfüllstoffen hergestellten Polymer-Bornitrid-Compounds können ebenfalls zusätzlich noch Bornitrid-Primärpartikel zugesetzt werden. Als Bornitrid-Primärpartikel können dabei Bornitrid-Pulver eingesetzt werden, aber auch wenig stabile Bornitrid-Agglomerate wie beispielsweise sprühgetrocknete Bornitrid-Agglomerate, die beim Compoundieren weitgehend oder ganz zu Primärpartikeln degradiert werden. Der Anteil an zusätzlichen Bornitrid-Primärpartikeln im erfindungsgemäßen Polymer-Bornitrid-Compound beträgt vorzugsweise $\leq 20$ Vol.-%, besonders bevorzugt $\leq 10$ Vol.-%.

Die erfindungsgemäßen Bauteile und Polymer-Bornitrid-Compounds können neben den Bornitrid-Agglomeraten bzw. neben den Bornitrid-Agglomeraten und Sekundärfüllstoffen mit einer Wärmeleitfähigkeit von $\geq 5$ W/m*K auch weitere von Bornitrid verschiedene Füllstoffe mit einer geringeren Wärmeleitfähgikeit von $< 5$ W/m*K wie beispielsweise Talk enthalten.

Die erfindungsgemäßen Bauteile und Polymer-Bornitrid-Compounds können neben den wärmeleitenden Füllstoffen auch noch zusätzliche Additive und Füllstoffe enthalten, die andere Funktionen wie etwa die Anpassung der Fließfähigkeit, der Alterungsstabilität, der elektrischen Eigenschaften oder des Wärmeausdehnungskoeffizienten übernehmen. Die Füllstoffe können dabei beispielsweise als brockige, sphärische, plättchenförmige, nadelförmige oder als Partikel mit regelloser Morphologie vorliegen.

Zur Herstellung der erfindungsgemäßen Bauteile und Polymer-Bornitrid-Compounds können auch Mischungen unterschiedlicher Fraktionen von nitridgebundenen isotropen Bornitrid-Agglomeraten oder von anisotropen schuppenförmigen Bornitrid-Agglomeraten eingesetzt werden. Auch Mischungen von nitridgebundenen isotropen Bornitrid-Agglomeraten und von anisotropen schuppenförmigen Bornitrid-Agglomeraten sind möglich.

Die erfindungsgemäßen Polymer-Bornitrid-Compounds können durch Compoundierung mit allen gängigen Compoundieraggregaten hergestellt werden. Hierzu gehören unter anderem Einschneckenextruder, Doppelschneckenextruder, tangierend oder dichtkämmend, gleich oder gegenläufig, Planetenwalzenextruder, Nutbuchsenextruder, Stiftextruder, Kalandrieren, Buss Ko-Kneter, Scherwalzenextruder, Spritzgussmaschinen und Rührkessel. Die Compoundierung im Doppelschneckenextruder ist bevorzugt.

Das zur Compoundierung eingesetzte Polymer kann in Pulverform oder als Granulat vorliegen. Das Polymer kann mit den Bornitrid-Agglomeraten oder den Bornitrid-Agglomeraten und weiteren Füllstoffen trocken vorgemischt werden, bevor die Mischung einem Compoundieraggregat zugeführt wird. Alternativ dazu kann die Zugabe der Bornitrid-Agglomerate, Verstärkungsfüllstoffe und gegebenenfalls weiterer Füllstoffe über Seitendosierungen in die Polymerschmelze erfolgen, ohne dass die Füllstoffe zuvor mit dem Polymer vorgemischt werden. Weiterhin kann zunächst ein Masterbatch, also ein Polymer-compound mit einem Füllstoffgehalt, der höher ist als in der Endanwendung, hergestellt werden, welches anschließend mit dem Polymer beispielsweise in einem Doppelschneckenextruder homogenisiert wird.

Nach der Homogenisierung im Compoundieraggregat wird die gefüllte Polymerschmelze granuliert. Die Granulation des Polymer-Bornitrid-Compounds kann beispielsweise durch Stranggranulation, Unterwassergranulation, Heißabschlag oder Kaltabschlag erfolgen. Auch eine Kombination der Verfahren zur Verarbeitung des Compounds ist möglich. Das erhaltene Polymer-Bornitrid-Compound in Granulatform kann über Formgebungsverfahren wie beispielsweise Spritzguß zu Bauteilen weiterverarbeitet werden.

Die Polymer-Bornitrid-Compounds können durch Spritzgießen, Extrudieren, Kalandrieren, Transfermolden, Pressen, Gießen, Druckgießen, Rakeln oder Dispensen in jede beliebige Form gebracht werden, vorzugsweise durch Spritzgießen oder Extrudieren. Die Verarbeitung über Spritzguß ist besonders bevorzugt. Hierzu kann beispielsweise das CompoundGranulat in einer hydraulisch oder elektromechanisch angetriebenen Plastifiziereinheit aufgeschmolzen und, gegebenenfalls noch mit weiteren zusätzlichen Füllstoffen oder Polymeren, bis zum Austritt aus der Düse homogenisiert werden. Anschließend kann die Schmelze während der Einspritzphase in das geschlossene Werkzeug einer Spritzgußanlage eingespritzt werden. Hierbei können sowohl klassische Spritzgießwerkzeuge als auch Werkzeuge mit Heißkanalsystemen zum Einsatz kommen. Nach vollständiger Füllung der Kavität kann der Nachdruck zur Kompensation der abkühlbedingten Schwindung im Bauteil bis zum Erstarren des Anschnitts aufgebracht werden. Nach Ablauf der Kühlzeit kann das Werkzeug geöffnet und das Bauteil ausgestoßen werden. Das Auswerfen kann wiederum über die Auswerfereinheit der Spritzgussmaschine oder über andere Entnahmemöglichkeiten wie Roboterarme erfolgen.

Bei der Verarbeitung, d.h. während der Herstellung des erfindungsgemäßen Polymer-Bornitrid-Compounds oder während der Formgebung des erfindungsgemäßen Bauteils, kann ein Anteil der nitridgebundenen isotropen Bornitrid-Agglomerate durch Scherung während der Compoundierung oder während der Formgebung zu Primärpartikeln oder Agglomeratfragmenten degradieren, ohne dass die vorteilhaften Eigenschaften des Compounds verloren gehen.

Die erfindungsgemäßen Bauteile werden zur Wärmeleitung von zu temperierenden Komponenten oder Baugruppen verwendet, vorzugsweise von elektronischen Komponenten oder Baugruppen, und können eine mechanische Last aufnehmen oder weiterleiten.

In einer bevorzugten Weiterbildung der erfindungsgemäßen Bauteile enthalten diese dünnwandige Bestandteile, durch die Wärme von/zu temperierenden Komponenten oder Baugruppen geleitet werden kann. Die dünnwandigen Teile des Bauteils haben bevorzugt eine Dicke von $\leq 3$ mm, noch bevorzugter von $\leq 2$ mm. Das erfindungsgemäße Bauteil kann beispielsweise in einer bevorzugten Ausführungsform als dünne Platte einer Stärke von $\leq 3$ mm, noch bevorzugter von $\leq 2$ mm vorliegen, die beispielsweise mittels Spritzguß oder Extrusion als Formgebungsmethode hergestellt werden kann. Die erfindungsgemäßen Bauteile können elektrisch leitfähig oder elektrisch isolierend sein. Es ist auch möglich, während der Formgebung oder in einem nachfolgenden Verarbeitungsschritt ein Laminat aus leitfähigen und nicht leitfähigen Schichten in Form einer dünnen Platte zu erzeugen, wobei zumindest die elektrisch isolierende Schicht der dünnen Platte unter Verwendung des erfindungsgemäßen Polymer-Bornitrid-Compounds hergestellt wurde.

Das erfindungsgemäße Bauteil kann nach der beispielsweise mittels Spritzguß erfolgten Formgebung mit einer Beschichtung versehen werden, beispielsweise kann eine Metallisierung durchgeführt werden. Es können auch Leiterbahnen appliziert werden.

Das erfindungsgemäße Bauteil kann als ebene oder geschwungene Platte mit einheitlicher oder uneinheitlicher Wandstärke vorliegen. Die Oberfläche des erfindungsgemäßen Bauteils kann eben oder strukturiert vorliegen.

Das erfindungsgemäße Bauteil kann als Trägerplatte für Elektronikkomponenten dienen, oder Wärme von einem Bauteil auf ein anderes übertragen. Das erfindungsgemäße Bauteil kann auch als Folie oder als dünnwandiges Rohr vorliegen.

Das erfindungsgemäße Bauteil kann auch als dünnwandiger wesentlicher Bestandteil eines überwiegend dünnwandigen Gehäuses, einer Halterung oder eines Verbindungselements oder eines Rohres vorliegen. Weiterhin kann das erfindungsgemäße Bauteil als Kühlrippe als Bestandteil eines Kühlkörpers, eines Gehäuses, einer Halterung, eines Verbindungselements oder Rohrs vorliegen, wobei die Halterung beispielsweise ein Lampensockel sein kann. Das erfindungsgemäße Bauteil kann in komplexeren Bauteilen als Platte Bestandteil eines Plattenstapels sein, wobei die Platte im Plattenstapel als Kühlrippe dienen kann.

Die Erfindung und bevorzugte Ausführungsformen werden in den Ansprüchen näher spezifiziert.

Beispiele und Vergleichsbeispiele

Beispiel 1:

Beispiel 1 a): Herstellung von Bornitrid-Hybrid-Flakes (anisotrope schuppenförmige nitridgebundene Bornitrid-Agglomerate)

Es werden 4000 g Aluminiumpaste STAPA ALUPOR SK I-NE/70 (Fa. Eckart, Hartenstein, Deutschland) und 7000 g Bornitrid-Pulver BORONID® S1-SF (ESK Ceramics GmbH & Co. KG, Deutschland; mittlere Partikelgröße $d_{50}$ = 3 μm, gemessen mittels Laserbeugung (Mastersizer 2000, Malvern, Naßmessung)) in einem PE-Fass auf dem Rollenbock mit Mahlkugeln für 20 Stunden homogenisiert. Das Pulvergemisch wird über eine gravimetrische Dosierung mit 8 kg/h in einen Walzenkompaktierer RC 250*250 (Powtec, Remscheid, Deutschland) dosiert. Der Walzenkompaktierer ist so modifiziert, dass die glatten Edelstahlwalzen ohne Produktaufgabe auf Kontakt laufen. Es wird eine Anpresskraft von 75 kN auf die Walzen ausgeübt, was 3 kN/cm Walzspaltlänge entspricht und eine Walzendrehzahl von 20 U/min eingestellt. Es entstehen Bornitrid-Hybrid-Flakes mit einer Dicke von 30 μm und bis zu mehreren Zentimetern Durchmesser. An den Walzen klebende grüne (d.h. kompaktierte, aber noch nicht temperaturbehandelte) Bornitrid-Hybrid-Flakes werden durch einen Schaber abgezogen. Der Feinanteil < 200 μm wird nach der Kompaktierung abgesiebt und in der nächsten Rohstoffhomogenisierung mit 4000 g Aluminiumpaste und 7000 g Bornitrid-Pulver S1 im PE-Fass zugeführt. Der Vorgang wird so lange wiederholt, bis in der Summe 55 kg Bornitrid-Hybrid-Flakes erzeugt wurden. Die Bornitrid-Hybrid-Flakes werden unter Luftabschluss in einer Atmosphäre aus 80 % Stickstoff und 20 % Argon bei 300 °C entbindert und der Aluminiumanteil in den Bornitrid-Hybrid-Flakes wird bei 800 °C in einer Atmosphäre aus 80 % Stickstoff und 20 % Argon während einer Haltezeit von 5 Stunden weitestgehend in AlN umgewandelt. Anschließend erfolgt eine Hochtemperaturglühung bei 1950 °C für 2 Stunden in einer Atmosphäre von 80 % Stickstoff und 20 % Argon.

Nach der Glühung beträgt der Aluminiumanteil insgesamt in den Bornitrid-Hybrid-Flakes 24,6 Gew.-% gemessen mittels alkalischem Schmelzaufschluss und ICP-OES (Arcos, Spectro, Kleve, Deutschland). Rechnerisch ergibt sich aus dem Aluminiumanteil ein Aluminiumnitridanteil im Bornitrid-Hybrid-Flake von 37 Gew.-%.

Der Aluminium-frei-Gehalt beträgt 0,35 Gew.-%. Der Aluminium- frei-Gehalt wird gemessen mittels Extraktion mit 2-molarer HCl für 16 h bei Raumtemperatur. An dem klaren Überstand aus der Extraktion wird der Aluminiumgehalt der Lösung mit ICP-OES (Arcos, Spectro, Kleve, Deutschland) bestimmt. Der Kohlenstoffgehalt beträgt 0,05%, er wird indirekt gemessen mittels Verbrennung in Sauerstoff im Induktionsofen und anschließender IR-Messung von $CO_2$ (CS200, LECO, Mönchengladbach, Deutschland).

Die spezifische Oberfläche wird gemäß ISO 18757 mittels Stickstoffadsorption und der 5-Punkt-BET-Methode an dem Gerät SA3100 (Coulter, USA) gemessen. Die Probe wird vor der Messung bei 300°C, 360 min in Vakuum ausgeheizt. Die spezifische Oberfläche beträgt 6,8 m$^2$/g.

Der Sauerstoffgehalt wird indirekt mittels Trägergasheißextraktion gemessen, wobei der Sauerstoff aus der Probe mit Kohlenstoff umgesetzt wird und der Gehalt an entstehendem $CO_2$ mit IR-Spektroskopie (TCH 600, LECO, Mönchengladbach, Deutschland) ermittelt wird. Der Sauerstoffgehalt beträgt 0,15%.

Röntgenographisch können nur die Phasen Bornitrid und Aluminiumnitrid nachgewiesen werden.

Die Bornitrid-Hybrid-Flakes werden in einem Schwingsieb mit Gummikugeln siebgebrochen. Dabei werden Siebe in der Reihenfolge 5 mm, 2 mm, 1 mm, 500 μm eingesetzt.

Die erhaltenen Bornitrid-Hybrid-Flakes in der Siebfraktion < 500 μm haben eine mittlere Partikelgröße ($d_{50}$) von 192 μm, gemessen mittels Laserbeugung (Mastersizer 2000, Malvern, Naßmessung). Die Dicke der Bornitrid-Hybrid-Flakes beträgt 30 μm. Die Dicke wird mit einer Präzisions-Digital-Messuhr ermittelt.

Der Texturindex, gemessen an einer Schüttung der Bornitrid-Hybrid-Flakes, beträgt 20,6.

Aus den hergestellten Bornitrid-Hybrid-Flakes wird eine Fraktion < 200 μm gebrochen und der Feinanteil < 100 μm durch Siebung abgetrennt. An der so erhaltenen

Siebfraktion 100 - 200 μm der Bornitrid-Hybrid-Flakes wird die Agglomeratstabilität mit der Ultraschallmethode bestimmt.

Die an den Bornitrid-Hybrid-Flakes ermittelte Agglomeratstabilität beträgt 75 %.

An der REM-Übersichtsaufnahme der hergestellten Bornitrid-Hybrid-Flakes Agglomerate in der Siebfraktion < 500 $\mu$m (Figur 3 a) sind die ebenen Oberflächen der Agglomerate deutlich zu sehen. Bei diesen Oberflächen handelt es sich um Formgebungsflächen, die durch das Formgebungsverfahren (Verpressen zwischen zwei sich drehenden gegenläufigen Walzen) unmittelbar erzeugt wurden und nicht durch nachfolgende Zerkleinerung entstanden sind. Figur 3b zeigt eine Bruchfläche eines Agglomerats mit einer Dicke von 30 $\mu$m, die ebene Formgebungsfläche dieses Agglomerats sowie die ebene Formgebungsfläche eines weiteren Agglomerats.

Beispiel 1 b):

Herstellung eines Compounds aus PA 6 mit 15 Vol.-% Bornitrid-Hybrid-Flakes und 10 Vol.-% Alumosilikat und 15 Vol.-% Glasfasern

Es werden in einen Doppelschneckenextruder (Coperion ZSK25, Stuttgart, Deutschland) in den Haupteinzug gravimetrisch PA 6 (Schulamid® 6 NV 12, A. Schulman, Kerpen, Deutschland) und Alumosilikat Trefil 1360-400 (Quarzwerke, Frechen, Deutschland) zudosiert. Das Alumosilikat hat eine Dichte von 3,6 g/cm$^3$, die Wärmeleitfähigkeit beträgt 14 W/m*K. Röntgenografisch ist die Hauptphase des Alumosilikats Kyanit ($Al_2SiO_5$). über eine gravimetrische Seitendosierung werden Bornitrid-Hybrid-Flakes und handelsübliche Glasfasern zudosiert. An dem Doppelschneckenextruder wird eine Schneckendrehzahl von 250 U/min eingestellt. Der Durchsatz beträgt 10 kg/h. Die vier gravimetrischen Dosiereinrichtungen werden so eingestellt, dass der Volumenanteil der Füllstoffe im Compound 15 Vol.-% Bornitrid-Hybrid-Flakes und 10 Vol.-% Alumosilikat und 15 Vol.-% Glasfasern entspricht. Das erhaltene Compound wird durch zwei 5 mm Düsen extrudiert und nach einer Kühlstrecke zu Granulat zerkleinert.

Beispiel 1 c): Spritzguss von 2 mm dünnen Platten, Messung der Wärmeleitfähigkeit und der mechanischen Eigenschaften

Das Compoundgranulat aus Beispiel 1 b) wird in einer Spritzgießmaschine (Engel e-motion) zu 2 mm dünnen Platten mit den Maßen 80x80x2 mm$^3$ spritzgegossen.

Die Wärmeleitfähigkeit wird an scheibenförmigen spritzgegossenen Proben einer Stärke von 2 mm gemessen, wobei die Probe für die Messung der Through-plane-Wärmeleitfähigkeit aus der Mitte einer spritzgegossenen Platte der Stärke von 2 mm (Abmessungen 2x80x80 mm$^3$) mit den Abmessungen 2x10x10 mm$^3$ präpariert wird. Die Dicke der Probe für die Wärmeleitfähigkeitsmessung entspricht der Plattendicke aus dem Spritzguss.

Zur Messung der Wärmeleitfähigkeit wird die Laser-Flash-Methode angewandt und mit dem Nanoflash LFA 447 (Netzsch, Selb, Deutschland) nach DIN EN ISO 22007-4 durchgeführt. Die Messung erfolgt bei 22 °C.

Die Bestimmung der Wärmeleitfähigkeit (WLF) erfolgt dabei durch Messung der Größen Temperaturleitfähigkeit a, spezifische Wärmekapazität $c_p$ und Dichte D und wird aus diesen Größen berechnet nach der Gleichung

$$WLF = a * c_p * D.$$

Die Messung von a wird mit dem Nanoflash LFA 447 (Netzsch, Selb, Deutschland) an den wie oben beschrieben hergestellten Proben der Größe 10x10x2 mm$^3$ durchgeführt.

Die Bestimmung der spezifischen Wärmekapazität $c_p$ erfolgt nach DIN EN ISO 11357 an einer DSC 7, Fa. Perkin Elmer, USA. Das Gerät arbeitet nach dem Prinzip der dynamischen Leistungsdifferenzkalorimetrie. Als Mess-Standard wird Saphir verwendet. Die Aufheizrate beträgt 20 K/min.

Die Dichte wird durch Wägung und Bestimmung der geometrischen Abmessungen der exakt geformten Proben ermittelt. Für die Messung wird der Standard Pyroceram 9606 verwendet.

An spritzgegossenen, trocken konditionierten Schulterzugstäben werden mittels Zugversuchen gemäß DIN EN ISO 527 die mechanischen Eigenschaften ermittelt.

Die Through-plane-Wärmeleitfähigkeit und die mechanischen Eigenschaften sind in Tabelle 1 aufgeführt.

Die an einer spritzgegossenen dünnen Platte der Abmessungen 80x80x2 mm$^3$ ermittelte Wärmeleitfähigkeit für das ungefüllte Polymer PA 6 (Schulamid® 6 NV 12) beträgt 0,26 W/m*K.

Beispiel 2:

Herstellung eines Compounds aus PA 6 mit 15 Vol.-% Bornitrid-Hybrid-Flakes und 15 Vol.-% Alumosilikat und 15 Vol.-% Glasfasern

Die Herstellung der Bornitrid-Hybrid-Flakes und die Compoundierung erfolgen gemäß Beispiel 1. Das Compound wird gemäß Beispiel 1 zu 80x80x2 mm$^3$ Platten abgemustert und die richtungsabhängige Wärmeleitfähigkeit ermittelt. Die Ermittlung der mechanischen Eigenschaften erfolgt gemäß Beispiel 1.
Die Through-plane-Wärmeleitfähigkeit und die mechanischen Eigenschaften sind in Tabelle 1 aufgeführt.

Beispiel 3:

Herstellung eines Compounds aus PA 6 mit 20 Vol.-% Bornitrid-Hybrid-Flakes und 20 Vol.-% Alumosilikat und 10 Vol.-% Glasfasern

Die Herstellung der Bornitrid-Hybrid-Flakes erfolgt gemäß Beispiel 1.
Die Compoundierung und die Spritzgießabmusterung sowie die Ermittlung der Wärmeleitfähigkeit und der mechanischen Eigenschaften erfolgen gemäß Beispiel 1.
Die Through-plane-Wärmeleitfähigkeit und die mechanischen Eigenschaften sind in Tabelle 1 aufgeführt.

Beispiel 4:

Herstellung eines Compounds aus PA 6 mit 20 Vol.-% Bornitrid-Hybrid-Flakes und 20 Vol.-% Glasfasern

Die Herstellung der Bornitrid-Hybrid-Flakes erfolgt gemäß Beispiel 1.
Die Compoundierung und die Spritzgießabmusterung sowie die Ermittlung der Wärmeleitfähigkeit und der mechanischen Eigenschaften erfolgen gemäß Beispiel 1. Es werden bei der Compoundierung keine Sekundärfüllstoffe zudosiert.
Die Through-plane-Wärmeleitfähigkeit und die mechanischen Eigenschaften sind in Tabelle 1 aufgeführt.

Vergleichsbeispiel 1:

Compound aus PA66 mit 35 Vol.-% Bornitrid-Primärpartikeln und mit 6 Vol.-% Glasfasern

Das Compound Thermatech NN-10GF/50MN (PolyOne, Gaggenau, Deutschland) wurde gemäß Beispiel 1 zu 80x80x2 mm$^3$ Platten abgemustert und die richtungsabhängige Wärmeleitfähigkeit ermittelt. An spritzgegossenen Schulterzugstäben wurden mittels Zugversuchen gemäß DIN EN ISO 527 die mechanischen Eigenschaften ermittelt.
Die Through-plane-Wärmeleitfähigkeit und die mechanischen Eigenschaften sind in Tabelle 2 aufgeführt.

Vergleichsbeispiel 2:

Herstellung eines Compounds aus PA 6 mit 40 Vol.-% Bornitrid-Hybrid-Flakes

Die Herstellung der Bornitrid-Hybrid-Flakes erfolgt gemäß Beispiel 1.
Die Compoundierung und die Spritzgießabmusterung sowie die Ermittlung der Wärmeleitfähigkeit und der mechanischen Eigenschaften erfolgen gemäß Beispiel 1. Es werden bei der Compoundierung keine Sekundärfüllstoffe und keine Glasfasern zudosiert.
Die Through-plane Wärmeleitfähigkeit und die mechanischen Eigenschaften sind in Tabelle 2 aufgeführt.
Der Vergleich von Beispiel 3 und Vergleichsbeispiel 2 zeigt die signifikante Erhöhung der mechanischen Eigenschaften, insbesondere der Festigkeit und der Bruchdehnung, durch die Zugabe von Glasfasern als Verstärkungsstoff bei konstantem Gesamtfüllstoffgehalt an wärmeleitfähigen Füllstoffen.

Tabelle 1:

| Beispiel-Nr. | Bornitrid-Agglomerate [Vol.-%] | SekundärFüllstoff [Vol.-%] | Glasfaser [Vol.-%] | Wärmeleitfähigkeit through-plane [W/m*K] | Zug-Modul [N/mm²] | ZugFestigkeit [N/mm²] | Bruchdehnung [%] |
|---|---|---|---|---|---|---|---|
| 1 | 15 | 10 | 15 | 0,9 | 12700 | 109 | 1,5 |
| 2 | 15 | 15 | 15 | 1,0 | 14400 | 107 | 1,3 |
| 3 | 20 | 20 | 10 | 1,4 | 15700 | 89 | 0,9 |
| 4 | 20 | 0 | 20 | 1,0 | 16900 | 124 | 1,5 |

Tabelle 2:

| Vergleichsbeispiel-Nr. | Bornitrid-Primärpartikel [Vol.-%] | Bornitrid-Agglomerate [Vol.-%] | Glasfaser [Vol.-%] | Wärmeleitfähigkeit through-plane [W/m*K] | Zug-Modul [N/mm²] | ZugFestigkeit [N/mm²] | Bruchdehnung [%] |
|---|---|---|---|---|---|---|---|
| 1 | 35 | 0 | 6 | 0,9 | 14000 | 85 | 1,5 |
| 2 | 0 | 40 | 0 | 1,5 | 11900 | 55 | 0,6 |

**Patentansprüche**

1. Bauteil hergestellt aus einem Polymer-Bornitrid-Compound, wobei das Polymer-Bornitrid-Compound zumindest einen Polymerwerkstoff, zumindest einen wärmeleitenden Füllstoff und zumindest einen Verstärkungsfüllstoff umfasst, wobei der zumindest eine wärmeleitende Füllstoff Bornitrid-Agglomerate umfasst, und wobei die Bornitrid-Agglomerate plättchenförmige hexagonale Bornitrid-Primärpartikel umfassen, welche miteinander mittels einer anorganischen Bindephase, welche wenigstens ein Nitrid und/oder Oxinitrid umfasst, verbunden sind.

2. Bauteil gemäß Anspruch 1, wobei das Bauteil an zumindest einem Teil des Bauteils eine Wandstärke von höchstens 3 mm. bevorzugt höchstens 2 mm aufweist.

3. Bauteil gemäß Anspruch 1 oder 2, wobei es sich bei dem Polymerwerkstoff um einen thermoplastischen Werkstoff handelt, insbesondere um Polyamid (PA), Polybutylentherphthalat (PBT), Polyethylentherephthalat (PET), Polyphenylensulfid (PPS), Polycarbonat (PC), Polypropylen (PP), ein thermoplastisches Elastomer (TPE), ein thermoplastisches Polyurethan-Elastomer (TPU), ein Polyätherätherketon (PEEK), ein flüssigkristallines Polymer (LCP) oder Polyoxymethylen (POM); oder
wobei es sich bei dem Polymerwerkstoff um eine duroplastische Formmasse handelt, insbesondere um eine Phenolformaldehydformmasse, eine Epoxidformmasse, eine Melaminformaldehydformmasse, eine Harnstoffformaldehydformmasse, Bulk Molding Compound (BMC) oder Sheet Molding Compund (SMC); oder
wobei es sich bei dem Polymerwerkstoff um ein Elastomer handelt, insbesondere um Liquid Silicon Rubber (LSR), Ethylen-Propylen-Dien-Kautschuk (EPDM), Nitrilkautschuk (NBR), Hydrierten Nitrilkautschuk (HNBR), Fluorkarbon-Kautschuk (FKM), Acrylat-Kautschuk (ACM) und Ethylen-Acrylat-Kautschuk (AEM).

4. Bauteil gemäß einem der Ansprüche 1 bis 3, wobei es sich bei dem Verstärkungsfüllstoff um Glasfasern, Kohlefasern, Aramidfasern, faserförmigen Wollastonit oder faserförmiges Alumosilikat handelt.

5. Bauteil gemäß einem der Ansprüche 1 bis 4, wobei die Through-plane-Wärmeleitfähigkeit des Bauteils wenigstens 1 W/m*K beträgt, vorzugsweise wenigstens 1,2 W/m*K, weiter vorzugsweise wenigstens 1,5 W/m*K und insbesondere bevorzugt wenigstens 1,8 W/m*K, wobei die Wärmeleitfähigkeit gemäß DIN EN ISO 22007-4 an spritzgegossenen Proben einer Dicke von 2 mm gemessen wird.

6. Bauteil gemäß einem der Ansprüche 1 bis 5, wobei die In-plane-Wärmeleitfähigkeit des Bauteils wenigstens 1,5 W/m*K beträgt, vorzugsweise wenigstens 1,8 W/m*K, weiter vorzugsweise wenigstens 2,2 W/m*K und insbesondere bevorzugt wenigstens 2,7 W/m*K, wobei die Wärmeleitfähigkeit gemäß DIN EN ISO 22007-4 an spritzgegossenen Proben einer Dicke von 2 mm gemessen wird.

7. Bauteil gemäß einem der Ansprüche 1 bis 6, wobei das Anisotropieverhältnis der In-plane-Wärmeleitfähigkeit zur Through-plane-Wärmeleitfähigkeit wenigstens 1,5 und höchstens 4, vorzugsweise wenigstens 1,5 und höchstens 3,5, weiter vorzugsweise wenigstens 1,5 und höchstens 3,0 und insbesondere bevorzugt wenigstens 1,5 und höchstens 2,5 beträgt.

8. Bauteil gemäß einem der Ansprüche 1 bis 7, wobei der Anteil an Bornitrid-Agglomeraten wenigstens 5 Vol.-%, vorzugsweise wenigstens 10 Vol.-%, weiter vorzugsweise wenigstens 15 Vol.-% und besonders bevorzugt wenigstens 20 Vol.-% beträgt, bezogen auf das Gesamtvolumen des Polymer-Bornitrid-Compounds.

9. Bauteil gemäß einem der Ansprüche 1 bis 8, wobei die anorganische Bindephase der Bornitrid-Agglomerate Aluminiumnitrid (AIN), Aluminiumoxinitrid, Titannitrid (TiN), Siliziumnitrid (Si3N4) oder/und Bornitrid (BN), vorzugsweise Aluminiumnitrid, Aluminiumoxinitrid, Titannitrid und/oder Siliziumnitrid, weiter vorzugsweise Aluminiumnitrid und/oder Aluminiumoxinitrid und insbesondere bevorzugt Aluminiumnitrid umfasst.

10. Bauteil gemäß einem der Ansprüche 1 bis 9, wobei die Bornitrid-Agglomerate einen Bindephasenanteil von wenigstens 1 Gew.-%, vorzugsweise von wenigstens 5 Gew.-%, weiter vorzugsweise von wenigstens 10 Gew.-%, weiter vorzugsweise von wenigstens 20 Gew.-% und insbesondere bevorzugt von wenigstens 30 Gew.-% aufweisen, jeweils bezogen auf die Gesamtmenge der Bornitrid-Agglomerate; und/oder wobei das Aspektverhältnis der Bornitrid-Agglomerate 1,0 bis 1,8, vorzugsweise 1,0 bis 1,5 beträgt.

11. Bauteil gemäß einem der Ansprüche 1 bis 10, wobei die Bornitrid-Agglomerate plättchenförmige hexagonale Bornitrid-Primärpartikel umfassen, welche miteinander zu schuppenförmig ausgebildeten Bornitrid-Agglomeraten agglomeriert sind.

12. Bauteil gemäß Anspruch 11, wobei der Texturindex der schuppenförmigen Bornitrid-Agglomerate größer als 2,0 ist und vorzugsweise 2,5 und mehr, weiter vorzugsweise 3,0 und mehr, besonders bevorzugt 3,5 und mehr beträgt; und/oder wobei die Dicke der schuppenförmigen Bornitrid-Agglomerate ≤ 500 μm, bevorzugt ≤ 200 μm, weiter bevorzugt ≤100 μm, weiter bevorzugt ≤ 70 μm, weiter bevorzugt ≤ 50 μm und insbesondere bevorzugt ≤ 35 μm beträgt; und/oder
wobei das Aspektverhältnis der schuppenförmigen Bornitrid-Agglomerate größer als 1 ist und vorzugsweise 2 und mehr, weiter vorzugsweise 3 und mehr, weiter vorzugsweise 5 und mehr und besonders bevorzugt 10 und mehr beträgt.

13. Bauteil gemäß einem der Ansprüche 11 oder 12, wobei die schuppenförmigen Bornitrid-Agglomerate eine anorganische Bindephase umfassen.

14. Bauteil gemäß Anspruch 13, wobei die schuppenförmigen Bornitrid-Agglomerate einen Bindephasen-Anteil von wenigstens 1%, vorzugsweise von wenigstens 5%, weiter vorzugsweise von wenigstens 10%, weiter vorzugsweise von wenigstens 20% und insbesondere vorzugsweise von wenigstens 30% aufweisen, jeweils bezogen auf die Gesamtmenge der schuppenförmigen Bornitrid-Agglomerate.

15. Bauteil gemäß Anspruch 13 oder 14, wobei die Bindephase Aluminiumnitrid (AlN), Aluminiumoxinitrid, Titannitrid (TiN), Siliziumnitrid (Si3N4) oder/und Bornitrid (BN), vorzugsweise Aluminiumnitrid, Aluminiumoxinitrid, Titannitrid und/oder Siliziumnitrid, weiter vorzugsweise Aluminiumnitrid und/oder Aluminiumoxinitrid und insbesondere bevorzugt Aluminiumnitrid enthält.

16. Bauteil gemäß einem der Ansprüche 1 bis 15, umfassend wenigstens einen von Bornitrid verschiedenen, die Wärmeleitfähigkeit des Polymer-Bornitrid-Compounds erhöhenden Füllstoff.

17. Bauteil gemäß Anspruch 16, wobei der von Bornitrid verschiedene Füllstoff ein Metallpulver ist, vorzugsweise gewählt aus der Gruppe umfassend Aluminium-, Silizium-, Titan-, Kupfer-, Eisen- und Bronzepulver, und Mischungen davon; oder
wobei der von Bornitrid verschiedene Füllstoff Kohlenstoff in Form von Graphit, expandiertem Graphit oder Ruß ist, wobei expandierter Graphit besonders bevorzugt ist; oder wobei der von Bornitrid verschiedene Füllstoff ein Oxid, Nitrid oder Carbid ist, vorzugsweise ausgewählt aus der Gruppe umfassend Aluminiumoxid, Magnesiumoxid, Aluminiumnitrid, Siliziumdioxid, Siliziumcarbid, Siliziumnitrid und Mischungen davon, besonders bevorzugt Aluminiumoxid, Magnesiumoxid und/oder Aluminiumnitrid; oder
wobei der von Bornitrid verschiedene Füllstoff ein mineralischer Füllstoff ist und vorzugsweise ausgewählt ist aus der Gruppe umfassend Alumosilikate, Aluminiumsilikate, Magnesiumsilikat (2MgO*SiO2), Magnesiumaluminat (MgO*Al2O3), Brucit (Magnesiumhydroxid, Mg(OH)2), Aluminiumhydroxid (Al(OH)$_3$), Quarz, Cristobalit und Mischungen davon.

18. Bauteil gemäß einem der Ansprüche 16 oder 17, wobei der Gesamtanteil an Bornitrid-Agglomeraten und den von Bornitrid verschiedenen wärmeleitenden Füllstoffen wenigstens 20 Vol.-% beträgt, vorzugsweise wenigstens 30 Vol.-%, jeweils bezogen auf das Gesamtvolumen des Polymer-Bornitrid-Compounds.

19. Polymer-Bornitrid-Compound zur Herstellung eines Bauteils gemäß einem der Ansprüche 1 bis 18, wobei das Polymer-Bornitrid-Compound zumindest einen Polymerwerkstoff, zumindest einen wärmeleitenden Füllstoff und zumindest einen Verstärkungsfüllstoff umfasst, wobei der zumindest eine wärmeleitende Füllstoff Bornitrid-Agglomerate umfasst, und wobei die Bornitrid-Agglomerate plättchenförmige hexagonale Bornitrid-Primärpartikel umfassen, welche miteinander mittels einer anorganischen Bindephase, welche wenigstens ein Nitrid und/oder Oxinitrid umfasst, verbunden sind.

20. Verwendung eines Bauteils nach einem der Ansprüche 1 bis 18 zur Wärmeleitung zur Temperierung von Komponenten oder Baugruppen, vorzugsweise von elektronischen Komponenten oder Baugruppen.

**Claims**

1. A component part produced from a polymer/boron nitride compound, wherein the polymer/boron nitride compound comprises at least one polymer material, at least one thermally conductive filler, and at least one reinforcing filler, wherein the at least one thermally conductive filler comprises boron nitride agglomerates, and wherein the boron nitride agglomerates are platelet-shaped hexagonal primary boron nitride particles that are bonded to each other by means of an inorganic binder phase that comprises at least one nitride and/or oxynitride.

2. The component part according to claim 1, wherein the wall thickness of at least part of the component part is at most 3 mm, and preferably at most 2 mm.

3. The component part according to claim 1 or 2, wherein the polymer material is a thermoplastic material, in particular polyamide (PA), polybutylene terephthalate (PBT), polyethylene terephthalate (PET), polyphenylene sulfide (PPS), polycarbonate (PC), polypropylene (PP), a thermoplastic elastomer (TPE), a thermoplastic polyurethane elastomer (TPU), a polyether ether ketone (PEEK), a liquid crystalline polymer (LCP) or polyoxymethylene (POM); or
wherein the polymer material is a duroplastic molding material, in particular a phenol formaldehyde molding material, an epoxide molding material, a melamine formaldehyde molding material, a urea formaldehyde molding material, a bulk molding compound (BMC) or sheet molding compound (SMC); or
wherein the polymer material is an elastomer, in particular liquid silicon rubber (LSR), ethylene propylene diene rubber (EPDM), nitrile rubber (NBR), hydrated nitrile rubber (HNBR), fluorocarbon rubber (FKM), acrylate rubber (ACM) and ethylene acrylate rubber (AEM).

4. The component part according to one of claims 1 to 3, wherein the filler can be glass fibers, carbon fibers, aramide fibers, fibrous wollastonite or fibrous aluminosilicate.

5. The component part according to one of claims 1 to 4, wherein the through-plane thermal conductivity of the component part is at least 1 W/m*K, preferably at least 1.2 W/m*K, more preferably at least 1.5 W/m*K and particularly preferably at least 1.8 W/m*K, wherein the thermal conductivity is measured according to DIN EN ISO 22007-4 on 2 mm thick injection-molded samples.

6. The component part according to one of claims 1 to 5, wherein the in-plane thermal conductivity of the component part is at least 1.5 W/m*K, preferably at least 1.8 W/m*K, even more preferably at least 2.2 W/m*K and particularly preferably at least 2.7 W/m*K, wherein the thermal conductivity is measured according to DIN EN ISO 22007-4 on 2 mm thick injection-molded samples.

7. The component part according to one of claims 1 to 6, wherein the anisotropy ratio of the in-plane thermal conductivity to the through-plane thermal conductivity is at least 1.5 and at most 4, preferably at least 1.5 and at most 3.5, even more preferably at least 1.5 and at most 3.0, and particularly preferably at least 1.5 and at most 2.5.

8. The component part according to one of claims 1 to 7, wherein the percentage of boron nitride agglomerates is at least 5% by volume, preferably at least 10% by volume, even more preferably at least 15% by volume and particularly preferably at least 20% by volume based on the total volume of the polymer/boron nitride compound.

9. The component part according to one of claims 1 to 8, wherein the inorganic binder phase of the boron nitride agglomerates comprises aluminum nitride (AlN), aluminum oxynitride, titanium nitride (TiN), silicon nitride (Si3N4) and/or boron nitride (BN), preferably aluminum nitride, aluminum oxynitride, titanium nitride and/or silicon nitride, more preferably aluminum nitride and/or aluminum oxynitride, and particularly preferably aluminum nitride.

10. The component part according to one of claims 1 to 9, wherein the percentage of the binder phase in the boron nitride agglomerates is at least 1% by weight, preferably at least 5% by weight, even more preferably at least 10% by weight, even more preferably at least 20% by weight, and particularly preferably at least 30% by weight based on the total amount of boron nitride agglomerates in each case, and/or
wherein the aspect ratio of the boron nitride agglomerates is 1.0 to 1.8, preferably 1.0 to 1.5.

11. The component part according to one of claims 1 to 10, wherein the boron nitride agglomerates comprise platelet-shaped hexagonal primary boron nitride particles that are agglomerated with each other into scale-like boron nitride agglomerates.

12. The component part according to claim 11, wherein the texture index of the scale-like boron nitride agglomerates is preferably greater than 2.0 and preferably 2.5 and more, more preferably 3.0 and more, and particularly preferably 3.5 and more; and/or

wherein the thickness of the scale-like boron nitride agglomerates is $\leq 500$ $\mu$m, preferably $\leq 200$ $\mu$m, more preferably $\leq 100$ $\mu$m, even more preferably $\leq 70$ $\mu$m, even more preferably $\leq 50$ $\mu$m and particularly preferably $\leq 35$ $\mu$m; and/or wherein the aspect ratio of the scale-like boron nitride agglomerates is greater than 1 and is preferably 2 and more, even more preferably 3 and more, even more preferably 5 and more and particularly preferably 10 and more.

13. The component part according to one of claims 11 or 12, wherein the scale-like boron nitride agglomerates comprise an inorganic binder phase.

14. The component part according to claim 13, wherein the scale-like boron nitride agglomerates have a percent binder phase of at least 1%, preferably at least 5%, more preferably at least a 10%, even more preferably at least 20%, and particularly preferably at least 30%, based on the total amount of scale-like boron nitride agglomerates in each case.

15. The component part according to claim 13 or 14, wherein the binder phase contains aluminum nitride (AlN), aluminum oxynitride, titanium nitride (TiN), silicon nitride (Si3N4) and/or boron nitride (BN), preferably aluminum nitride, aluminum oxynitride, titanium nitride and/or silicon nitride, more preferably aluminum nitride and/or aluminum oxynitride, and particularly preferably aluminum nitride.

16. The component part according to one of claims 1 to 15, comprising at least one filler different from boron nitride that increases the thermal conductivity of the polymer/boron nitride compound.

17. The component part according to claim 16, wherein the filler different from boron nitride is a powdered metal, preferably selected from the group comprising aluminum, silicon, titanium, copper, iron and bronze powder and mixtures thereof; or

wherein the filler different from boron nitride may be carbon in the form of graphite, expanded graphite or carbon black, expanded graphite being particularly preferred; or

wherein the filler different from boron nitride is an oxide, nitride or carbide preferably selected from the group comprising aluminum oxide, magnesium oxide, aluminum nitride, silicon dioxide, silicon carbide, silicon nitride and mixtures thereof, particularly preferably aluminum oxide, magnesium oxide and/or aluminum nitride; or

wherein the filler different from boron nitride is a mineral filler and is preferably selected from the group comprising aluminosilicates, aluminum silicates, magnesium silicate ($2MgO*SiO_2$), magnesium aluminate ($MgO*Al_2O_3$), brucite (magnesium hydroxide, Mg(OH)2), aluminum hydroxide ($Al(OH)_3$), quartz, cristobalite and mixtures thereof.

18. The component part according to one of claims 16 or 17, wherein the total percentage of boron nitride agglomerates and thermally conductive fillers different from boron nitride is at least 20% by volume, and preferably at least 30% by volume based on the total volume of the polymer/boron nitride compound in each case.

19. The polymer/boron nitride compound for producing a component part according to one of claims 1 to 18, wherein the polymer/boron nitride compound comprises at least one polymer material, at least one thermally conductive filler, and at least one reinforcing filler, and wherein the at least one thermally conductive filler comprises boron nitride agglomerates.

20. Use of a component part according to one of claims 1 to 18, for thermal conduction to control the temperature of component parts or assemblies, preferably electronic component parts or assemblies.

**Revendications**

1. Composant constitué d'un composé de polymère-nitrure de bore, le composé de polymère-nitrure de bore comprenant au moins un matériau polymère, au moins une charge thermoconductrice et au moins une charge renforçante, et dans lequel l'au moins une charge thermoconductrice comprend des agglomérés de nitrure de bore, et dans lequel les agglomérés de nitrure de bore comprennent des particules primaires de nitrure de bore hexagonales en forme de petites plaques, lesquelles sont liées les unes aux autres par le moyen d'une phase de liant inorganique, laquelle comprend au moins un nitrure et / ou un oxynitrure.

2. Composant selon la revendication 1, dans lequel le composant sur au moins une partie du composant a une épaisseur de paroi d'au plus 3 mm, de préférence d'au plus 2 mm.

3. Composant selon la revendication 1 ou 2, dans lequel le matériau polymère est un matériau thermoplastique, en particulier du polyamide (PA), du téréphtalate de polybutylène (PBT), du téréphtalate de polyéthylène (PET), du sulfure de polyphénylène (PPS), du polycarbonate (PC), du polycarbonate (PC), du polypropylène (PP), un élastomère thermoplastique (TPE), un élastomère de polyuréthane thermoplastique (TPU), une polyétheréthercétone (PEEK), un polymère à cristaux liquides (LCP) ou du polyoxyméthylène (POM); ou
dans lequel le matériau polymère est une composition de moulage thermodurcissable, en particulier une composition de moulage à base de phénolformaldéhyde, une composition de moulage époxy, une composition de moulage mélamine-formaldéhyde, une composition de moulage urée-formaldéhyde, un composé de moulage en masse (BMC) ou un composé de moulage en feuille (SMC); ou
dans lequel le matériau polymère est un élastomère, en particulier du caoutchouc de silicone liquide (LSR), du caoutchouc d'éthylène-propylène-diène (EPDM), du caoutchouc nitrile (NBR), du caoutchouc nitrile hydrogéné (HNBR), du caoutchouc fluorocarboné (FKM), du caoutchouc acrylate (ACM) et du caoutchouc acrylate d'éthylène (AEM).

4. Composant selon l'une des revendications 1 à 3, dans lequel la charge renforçante est en fibres de verre, en fibres de carbone, en fibres d'aramide, en wollastonite fibreuse ou en aluminosilicate fibreux.

5. Composant selon l'une des revendications 1 à 4, dans lequel la conductivité thermique à travers le plan est d'au moins 1 W / m * K, de préférence d'au moins 1,2 W / m * K, davantage de préférence d'au moins 1,5 W / m * K et en particulier de préférence d'au moins 1,8 W / m * K, dans lequel la conductivité thermique est mesurée sur des échantillons moulés par injection d'une épaisseur de 2 mm selon DIN EN ISO 22007-4.

6. Composant selon l'une des revendications 1 à 5, dans lequel la conductivité thermique dans le plan du composant est d'au moins 1,5 W / m * K, de préférence d'au moins 1,8 W / m * K, davantage de préférence d'au moins 2,2 W / m * K et en particulier de préférence d'au moins 2,7 W / m * K, dans lequel la conductivité thermique est mesurée sur des échantillons moulés par injection d'une épaisseur de 2 mm selon DIN EN ISO 22007-4.

7. Composant selon l'une des revendications 1 à 6, dans lequel le rapport d'anisotropie de la conductivité thermique dans le plan pour une conductivité thermique à travers le plan d'au moins 1,5 et d'au plus 4, de préférence d'au moins 1,5 et d'au plus 3,5, davantage de préférence d'au moins 1,5 et est d'au plus 3,0 et en particulier de préférence d'au moins 1,5 et d'au plus 2,5.

8. Composant selon l'une des revendications 1 à 7, dans lequel la proportion d'agglomérats de nitrure de bore comporte au moins 5% en volume, de préférence au moins 10% en volume, davantage de préférence au moins 15% en volume et particulièrement de préférence au moins 20% en volume, par rapport au volume total du composé de polymère-nitrure de bore.

9. Composant selon l'une quelconque des revendications 1 à 8, dans lequel la phase de liant inorganique des agglomérés de nitrure de bore comprend du nitrure d'aluminium (AlN), de l'oxynitrure d'aluminium, du nitrure de titane (TiN), du nitrure de silicium (Si3N4) et / ou du nitrure de bore (BN), de préférence du nitrure d'aluminium, de l'oxynitrure d'aluminium, du nitrure de titane et / ou du nitrure de silicium, plus préférentiellement du nitrure d'aluminium et / ou de l'oxynitrure d'aluminium, et en particulier de préférence du nitrure d'aluminium.

10. Composant selon l'une quelconque des revendications 1 à 9, dans lequel les agglomérés de nitrure de bore ont une teneur en phase liante d'au moins 1% en poids, de préférence d'au moins 5% en poids, mieux encore d'au moins 10% en poids, mieux encore d'au moins 20% en poids et de manière particulièrement préférée d'au moins 30% en poids, respectivement par rapport à la quantité totale d'agglomérats de nitrure de bore; et / ou
dans lequel le rapport d'aspect des agglomérés de nitrure de bore est compris entre 1,0 et 1,8, de préférence entre 1,0 et 1,5.

11. Composant selon l'une des revendications 1 à 10, dans lequel les agglomérés de nitrure de bore comprennent des particules primaires de nitrure de bore hexagonales en forme de petites plaques, qui sont agglomérées les unes avec les autres pour former des agglomérés de nitrure de bore qui se chevauchent comme des écailles.

12. Composant selon la revendication 11, dans lequel l'indice de texture des agglomérés de nitrure de bore qui se chevauchent comme des écailles est supérieur à 2,0, et est de préférence égal à 2,5 et plus, plus préférablement à 3,0 et plus, mieux encore à 3,5 et plus; et / ou
dans lequel l'épaisseur des agglomérés de nitrure de bore qui se chevauchent comme des écailles est inférieure ou égale à 500 microns, de préférence inférieure ou égale à 200 microns, plus préférablement inférieure ou égale à 100 microns, plus préférablement inférieure ou égale à 70 microns, plus préférablement inférieure ou égale à 35 microns; et / ou

dans lequel le rapport d'aspect des agglomérés de nitrure de bore qui se chevauchent comme des écailles est supérieur à 1 et est de préférence 2 et plus, plus de préférence 3 et plus, davantage de préférence 5 et plus, et particulièrement de préférence 10 et plus.

**13.** Composant selon l'une quelconque des revendications 11 ou 12, dans lequel les agglomérés feuilletés de nitrure de bore comprennent une phase de liant inorganique.

**14.** Composant selon la revendication 13, dans lequel les agglomérés de nitrure de bore qui se chevauchent comme des écailles ont une teneur en phase de liant d'au moins 1%, de préférence d'au moins 5%, davantage de préférence d'au moins 10%, davantage de préférence d'au moins 20% et en particulier de préférence d'au moins 30% respectivement par rapport à la quantité totale des agglomérés de nitrure de bore qui se chevauchent comme des écailles

**15.** Composant selon la revendication 13 ou 14, dans lequel la phase de liant comporte du nitrure d'aluminium (AIN), de l'oxynitrure d'aluminium, du nitrure de titane (TiN), du nitrure de silicium (Si3N4) et / ou du nitrure de bore (BN), de préférence du nitrure d'aluminium, de l'oxynitrure d'aluminium, du nitrure de titane et / ou du nitrure de silicium, de préférence du nitrure d'aluminium et / ou de l'oxynitrure d'aluminium, et en particulier de préférence du nitrure d'aluminium.

**16.** Composant selon l'une des revendications 1 à 15, comprenant au moins une charge autre que le nitrure de bore qui augmente la conductivité thermique du composé de polymère-nitrure de bore.

**17.** Composant selon la revendication 16, dans lequel la charge autre que le nitrure de bore est une poudre de métal, de préférence choisie parmi le groupe comprenant les poudres d'aluminium, de silicium, de titane, de cuivre, de fer et de bronze, et leurs mélanges; ou

dans lequel la charge autre que le nitrure de bore est du carbone sous forme de graphite, de graphite expansé ou de noir de carbone, dans lequel le graphite expansé est particulièrement préféré; ou

dans lequel la charge autre que le nitrure de bore est un oxyde, un nitrure ou un carbure, de préférence choisie parmi le groupe comprenant l'oxyde d'aluminium, l'oxyde de magnésium, le nitrure d'aluminium, le dioxyde de silicium, le carbure de silicium, le nitrure de silicium et leurs mélanges, en particulier de préférence l'oxyde d'aluminium, l'oxyde de magnésium et / ou le nitrure d'aluminium; ou

dans lequel la charge autre que le nitrure de bore est une charge minérale et est de préférence choisie parmi le groupe comprenant les aluminosilicates, les silicates d'aluminium, le silicate de magnésium (2 MgO*SiO2), l'aluminate de magnésium (MgO*Al2O3), la brucite (hydroxyde de magnésium, Mg(OH)2), l'hydroxyde d'aluminium (Al(OH)3), le quartz, la cristobalite et leurs mélanges.

**18.** Composant selon l'une des revendications 16 ou 17, dans lequel la teneur totale en agglomérés de nitrure de bore et en charges thermoconductrices autre que le nitrure de bore est d'au moins 20% en volume, de préférence d'au moins 30% en volume, chacune par rapport au volume total du composé de polymère-nitrure de bore.

**19.** Composé de polymère-nitrure de bore pour la production d'un composant selon l'une quelconque des revendications 1 à 18, dans lequel le composé de polymère-nitrure de bore comprend au moins un matériau polymère, au moins une charge thermoconductrice et au moins une charge renforçante, dans lequel l'au moins une charge thermiquement conductrice comprend des agglomérés de nitrure de bore, et dans lequel les agglomérés de nitrure de bore comprennent des particules primaires de nitrure de bore hexagonales en forme de petites plaques, lesquelles sont liées les unes aux autres par le moyen d'une phase de liant inorganique, laquelle comprend au moins un nitrure et / ou un oxynitrure.

**20.** Utilisation d'un composant selon l'une des revendications 1 à 18 pour la conduction thermique pour le contrôle de la température de composants ou d'ensembles, de préférence de composants ou d'ensembles électroniques.

Figur 1:

Figur 2a:

Figur 2b:

Figur 3a:

Figur 3b:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060127422 A1
- WO 03013845 A1
- US 6048511 A
- EP 0939066 A1
- US 20020006373 A1
- US 20040208812 A1
- WO 2005021428 A1
- US 5854155 A
- US 6096671 A
- DE 102010050900 A1

**In der Beschreibung aufgeführte Nicht-Patentliteratur**

- **CHANDRASHEKAR RAMAN.** Boron Nitride in Thermoplastics: Effect of loading, particle morphology and processing conditions. *Proceedings of the NA-TAS Annual Conference on Thermal Analysis and Applications,* 2008, 60, , 1-60, 10